(19) Europäisches Patentamt
European Patent Office
Office européen des brevets

(11) **EP 4 449 884 A1**

(12) **EUROPEAN PATENT APPLICATION**

(43) Date of publication:
**23.10.2024 Bulletin 2024/43**

(21) Application number: **23382364.0**

(22) Date of filing: **19.04.2023**

(51) International Patent Classification (IPC):
**A23L 15/00** (2016.01)    **A23C 20/00** (2006.01)
**A23C 20/02** (2021.01)    **A23J 3/00** (2006.01)
**A23J 3/14** (2006.01)    **A23J 3/16** (2006.01)
**A23J 3/22** (2006.01)

(52) Cooperative Patent Classification (CPC):
**A23L 15/00; A23C 20/025; A23J 3/16; A23J 3/227; A23L 33/185**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Foods For Tomorrow. S.L.**
**08013 Barcelona (ES)**

(72) Inventors:
• **FERNÁNDEZ FARRÉS, Isabel**
  **E-08014 Barcelona (ES)**

• **BRUNO, Chloe Susanna Huckvale**
  **21020 Barrasso (IT)**
• **BEN SASSI, Elyes Renaud**
  **E-08013 Barcelona (ES)**
• **SALCEDO SANDOVAL, Jenny Lorena**
  **E-17180 Vilablareix, Girona (ES)**
• **LUKACS, Agnes**
  **E-08013 Barcelona (ES)**
• **JACOMME, Astrid Christine Marie**
  **E-08329 Teià (ES)**

(74) Representative: **ABG Intellectual Property Law, S.L.**
**Avenida de Burgos, 16D**
**Edificio Euromor**
**28036 Madrid (ES)**

(54) **SOLID PLANT-BASED FOOD PRODUCTS**

(57) The present invention relates to solid plant-based food products comprising soy protein isolates, an oil, optionally a transglutaminase, an acidulant, a salt and water; to a process of manufacture of said solid plant-based food product; and to a solid plant-based food product obtainable by said process.

EP 4 449 884 A1

**Description**

**FIELD OF THE INVENTION**

The present invention relates to the field of solid plant-based food products, in particular to plant-based food products mimicking animal-based food products such as cold cuts, dairy products, meat-derived products, egg products, seafood products and other non-plant-based food products such as pasta products; as well as to their method of manufacture.

**BACKGROUND OF THE INVENTION**

Consumption of food products containing proteins from vegetable or plant origin instead of protein of animal origin have gained increasing popularity over the years. The main motivations to follow a plant-based diet appear to be health aspirations, taste, animal welfare, and increasing environmental concern, with the former increasing in relevance due to the current climate crisis. Therefore, the industry is experiencing an expansion in the production of plant-based food products, such as meat analogues, dairy product analogues, seafood product analogues, egg product analogues, cold cuts, among others.

Organoleptic properties of food products, such as taste, texture and appearance, influence consumer acceptance and preference for said food products. Consumers expect to consume plant-based food products mimicking non-plant-based food products to have similar organoleptic properties. Thus, key features to be taken into consideration in the production of plant-based food products are texture, taste, and appearance.

Although plant-based food products are widely available in the market, a potential for development still remains. Particularly, currently available plant-based alternatives often lack in organoleptic appeal and/or nutritional value. In this regard, it is extremely complex to arrive at a composition which fulfils the organoleptic properties and/or nutritional value expected by consumers, in particular with respect to texture.

**SUMMARY OF THE INVENTION**

The inventors have surprisingly found that solid plant-based food products having excellent organoleptic properties, in particular with respect to texture, and/or nutritional value can be obtained when using a composition comprising as protein component a soy protein isolate characterized by a specific zeta potential and particle size. The inventors have observed that when other soy protein isolates are used, the resulting product does not fulfil the required organoleptic properties, in particular with respect to its texture.

Thus, in a first aspect, the present invention relates to a solid plant-based food product comprising:

i. from 15 to 30 wt.% of a soy protein isolate;
ii. from 0.5 to 40 wt.% of an oil;
iii. from 0 to 1 wt.% of transglutaminase;
iv. an acidulant to adjust the pH of the solid plant-based food product to from 5 to 8;
v. from 0.1 to 5 wt.% of a salt selected from the group consisting of NaCl, KCl and mixtures thereof; and
vi. from 30 to 85 wt.% of water;

wherein the weight percentages are expressed with respect to the total weight of the solid plant-based food product; and

wherein the soy protein isolate has a negative zeta potential from -20 to -50 mV when dispersed in water at pH 6.6, the soy protein isolate has a volume weighted mean diameter D[4,3] of from 80 to 400 $\mu$m when dispersed in water at pH 6.6, and the soy protein isolate is characterized by having a D90 particle size of from 150 to 800 $\mu$m when dispersed in water at pH 6.6.

In a second aspect, the invention relates to a process for the manufacture of a solid plant-based food product according to the first aspect, wherein the process comprises:

a) mixing the oil and a first part of the water to form a premix at a temperature of from -2 to 25 °C, preferably at a temperature of from -2 to 2 °C, even more preferably wherein the water is preferably provided as a mixture of water and ice;
b) adding the soy protein isolate to the premix obtained in step a);
c) shearing the mixture obtained in step b) until the temperature in the mixture is from 2 to 42 °C higher than the temperature in the mixture obtained in step b);

d) if the solid plant-based food product comprises the transglutaminase, adding the transglutaminase and a second part of the water to the mixture obtained in step c) and mixing to obtain a homogenous mixture;

e) if the solid plant-based food product comprises transglutaminase, shaping the mixture obtained in the previous step d) and subjecting the shaped mixture to a heat treatment wherein the core temperature reaches from 40 to 60 °C for 1 to 10 minutes, and subsequently to a heat treatment wherein the core temperature reaches from 65 to 95 °C for 3 to 10 minutes, or

if the solid plant-based food product does not comprise transglutaminase, shaping the mixture obtained in the step c) and subjecting the shaped mixture to a heat treatment wherein the core temperature reaches from 65 to 95 °C for 3 to 10 minutes;

f) cooling the mixture obtained in step e) to a temperature in the range of 0 to 10 °C to obtain the solid plant-based food product; and

wherein the acidulant and/or the salt are independently added in step a), between steps a) and b), or in step b), optionally in combination with a third part of the water.

In a third aspect, the invention relates to a solid plant-based food product obtainable by the process according to the second aspect.

## DESCRIPTION OF THE FIGURES

Figure 1 shows a comparison of the flow curves from soy protein isolates (SPI 1, 2, 6 and 7) at 10 wt.% concentration, pH 6.6 with transglutaminase (A) and without transglutaminase (B).

Figure 2 shows a comparison of the flow curves from soy protein isolates (SPI 3, 4, 5 and 8) at 10 wt.% concentration, pH 6.6 with transglutaminase (A) and without transglutaminase (B).

Figure 3 shows a comparison of the textural parameters obtained from cold cut model systems using different soy protein isolates (SPI 1 TO SPI 7).

Figure 4 shows a comparison of the textural parameters obtained in the systems in the absence of transglutaminase or with two different amounts of this enzyme.

Figure 5 shows a comparison of the textural parameters obtained in the systems using three different SPI 1 concentrations.

Figure 6 shows a visual comparison of the food product obtained using two different SPI 1 concentrations, one (left - 15 wt.% SPI 1) which is suitable for food product applications and one (right - 12.5 wt.% SPI 1) which is not.

Figure 7 shows a comparison of the textural parameters obtained in the systems as the pH decreases from left to right.

## DESCRIPTION OF THE INVENTION

Solid plant-based food product

In the first aspect, the invention relates to a solid plant-based food product comprising:

i. from 15 to 30 wt.% of a soy protein isolate;
ii. from 0.5 to 40 wt.% of an oil;
iii. from 0 to 1 wt.% of transglutaminase;
iv. an acidulant to adjust the pH of the solid plant-based food product to from 5 to 8;
v. from 0.1 to 5 wt.% of a salt selected from the group consisting of NaCl, KCl and mixtures thereof; and
vi. from 30 to 85 wt.% of water;

wherein the weight percentages are expressed with respect to the total weight of the solid plant-based food product; and
wherein the soy protein isolate has a negative zeta potential from -20 to -50 mV when dispersed in water at pH 6.6, the soy protein isolate has a volume weighted mean diameter D[4,3] of from 80 to 400 $\mu$m when dispersed in water at pH 6.6, and the soy protein isolate is characterized by having a D90 particle size of from 150 to 800 μm when dispersed in water at pH 6.6.

The term "solid" as used herein refers to a product that is firm and retains its shape and volume even in the absence of a confining container (i.e. it is not free-flowing), in particular at room temperature (20-25 °C) and atmospheric pressure.

The term "plant-based" as used herein refers to a product, in particular a food product, containing no components from animal origin, such as pesco-, ovo-, lacto-, and meat-based sources, and comprising at least a component from plant sources, such as plant-based proteins, in particular from legumes (e.g. soybeans, lentils, peas, chickpeas, favas), nuts, vegetables, wheat, whole grains, among others, preferably from soybeans. Preferably, "no components" refers to as containing less than 5 wt.% with respect to the total amount of the product, in particular the food product, more preferably less than 1 wt.%, even more preferably less than 0.1 wt.%, even more preferably 0 wt.%.

The term "food product" or "food" or "food composition" as used herein refers to a product which is intended and is suitable for ingestion of a human or an animal and provides at least one nutrient to the human or animal.

Examples of plant-based food products are plant-based meat product analogues (such as plant-based products mimicking sausages, chicken, beef products, pork products), plant-based dairy product analogues (such as plant-based products mimicking cheese, e.g. parmigiano, feta, manchego, edam, cheddar, gruyere, camembert, burgos), plant based cold cut analogues (such as plant-based products mimicking mortadella, fuet, dry sausage, cooked ham, salami), plant-based seafood product analogues (such as plant-based products mimicking fish, mollusks and shellfish, e.g. cooked squid (calamari), grilled, smoked, and raw salmon and/or tuna, whitefish), plant-based pasta product analogues and plant-based egg product analogues (such as nutritionally dense plant-based products mimicking fresh and dried pasta from durum wheat semolina and egg, fresh filled pasta and/or dumplings, whole cooked chicken eggs, whole cooked quail eggs).

Preferably, the solid plant-based food product of the invention is selected from the group consisting of a plant-based meat product analogue, a plant-based dairy product analogue, a plant-based seafood product analogue a plant-based pasta product analogue and a plant-based egg product analogue.

The term "analogue" when referring to a food product refers to a food product which aims to mimic the real product from animal origin.

The term "soy protein isolate" or "SPI" as used herein refers to a mixture of proteins obtained from defatted soybeans by removing most of the fat and carbohydrate fraction of the soybean, yielding a product with no less than 85 wt.% protein on a dry basis of said product, preferably no less than 90 wt.%, even more preferably from 90 to 95 wt.%.

The term "oil" refers to a liquid fat, in particular a plant-based fat, having a melting point below 20 °C. Examples of oils include olive oil, sunflower oil, peanut oil, safflower oil, sesame oil, corn oil, canola oil, soybean oil, linseed oil, castor oil, Tung oil, hemp seed oil, and almond oil.

The term "acidulant" refers to a compound which has a tart, sour or acidic flavor and which has an acid pH (in water), i.e. a pH below 7.0, preferably a pH from 2 to 5. Examples of acidulants are citric acid, acetic acid, ascorbic acid, fumaric acid, lactic acid, malic acid, phosphoric acid, tartaric acid and gluconic acid.

The solid plant-based food product of the invention comprises a soy protein isolate, which has a negative zeta potential from -20 to -50 mV when dispersed in water at pH 6.6, a volume weighted mean diameter D[4,3] of from 80 to 400 μm when dispersed in water at pH 6.6, and a D90 particle size of from 150 to 800 μm when dispersed in water at pH 6.6.

The zeta potential is the effective charge energy of a molecule in a solution or suspension, defining its electrostatic interactions in the solution or suspension. If all the particles in suspension have a large absolute charge of zeta potential, then they will tend to repel each other, thus avoiding flocculation/aggregation. However, if the particles have low zeta potential values or no net charge, then there is no force to prevent the particles coming together and flocculating. The general dividing line between stable and unstable suspensions is taken at either +30 mV or -30 mV. Particles with zeta potential more positive than +30 mV or more negative than -30 mV are normally considered stable. The zeta potential of a SPI may be measured by Dynamic Light Scattering (DLS), in particular by Continuous Monitored Phase-Analysis Light Scattering (cmPALS), of a dispersion of said SPI in distilled water at a concentration of 3 wt.% of SPI with respect to the total weight of the dispersion and at pH 6.6. Citric acid may be used to adjust the pH, in particular 1 M citric acid. Detailed experimental protocols to determine the zeta potential of the SPI are provided in the examples.

In the plant-based food product of the present invention, the SPI has a negative zeta potential from -20 to -50 mV when dispersed in water at pH 6.6, preferably from -25 to -45 mV, more preferably from -30 mV to -40 mV.

The volume weighted mean diameter D[4,3] is also known as the De Broucker mean and is a measure of particle size. It represents the center of mass for frequency distribution in units of volume, and it is commonly used to represent the mean diameter of a particle within a polydisperse system. The De Broucker mean is defined in terms of the moment-ratio system according to Equation 2,

$$D[4,3] = \frac{\sum n_i D_i^4}{\sum n_i D_i^3} \qquad \textit{Equation 2}$$

where $n_i$ is the frequency of occurrence of particles in size class i, having a mean diameter $D_i$.

Another measure of particle size is D90, which is the particle diameter point in microns below which 90 vol.% of the particles are contained.

D[4,3] and D90 may be determined using laser diffraction techniques. The D[4,3] and D90 of a SPI may be measured by Static Light Scattering (SLS) of a dispersion of said SPI in distilled water at a concentration of 3 wt.% of SPI with respect to the total weight of the dispersion and at pH 6.6. Citric acid may be used to adjust the pH, in particular 1 M citric acid. SLS is a technique that measures the intensity of the scattered light of dispersed particles illuminated by a laser beam. Particles are hit by a red beam light ($\lambda$=633 nm) and a blue beam light ($\lambda$=470 nm) and diffract these in all directions. Large particles diffract light on smaller angles with high intensity, whereas small particles diffract light on wider angles with lower intensity. Detailed experimental protocols to determine the D[4,3] and D90 of the SPI are provided in the examples.

In the plant-based food product of the present invention, the SPI has a volume weighted mean diameter D[4,3] of from 80 to 400 $\mu$m when dispersed in water at pH 6.6, preferably from 100 to 250 $\mu$m, more preferably from 150 to 200 $\mu$m.

In the plant-based food product of the present invention, the SPI has a D90 particle size of from 150 to 800 $\mu$m when dispersed in water at pH 6.6, preferably from 180 to 500 $\mu$m, more preferably from 200 to 400 $\mu$m, still more preferably from 300 to 400 $\mu$m.

In a particular embodiment, the solid plant-based food product of the invention comprises a soy protein isolate, which has a negative zeta potential of from -25 to -45 mV when dispersed in water at pH 6.6, a volume weighted mean diameter D[4,3] of from 100 to 250 $\mu$m when dispersed in water at pH 6.6, and a D90 particle size of from 180 to 500 $\mu$m when dispersed in water at pH 6.6.

In another particular embodiment, the solid plant-based food product of the invention comprises a soy protein isolate, which has a negative zeta potential from -30 to -40 mV when dispersed in water at pH 6.6, a volume weighted mean diameter D[4,3] of from 150 to 200 $\mu$m when dispersed in water at pH 6.6, and a D90 particle size of from 200 to 400 $\mu$m when dispersed in water at pH 6.6.

In another particular embodiment, the solid plant-based food product of the invention comprises a soy protein isolate, which has a negative zeta potential from -30 to -40 mV when dispersed in water at pH 6.6, a volume weighted mean diameter D[4,3] of from 150 to 200 $\mu$m when dispersed in water at pH 6.6, and a D90 particle size of from 300 to 400 $\mu$m when dispersed in water at pH 6.6.

A non-Newtonian fluid is a fluid that does not follow Newton's law of viscosity, that is, it has variable viscosity dependent on shear stress. In non-Newtonian fluids, viscosity can change when under force to either more or less viscous. The viscosity (i.e. the gradual resistance to deformation by shear or tensile stresses) of non-Newtonian fluids is dependent on the applied shear rate. In a Newtonian fluid, the relation between the shear stress and the shear rate is linear, passing through the origin, the constant of proportionality being the coefficient of viscosity. In a non-Newtonian fluid, the relation between the shear stress and the shear rate is different. Therefore, a constant coefficient of viscosity cannot be defined. The viscosity of a shear thinning fluid appears to decrease when the shear rate increases. The Herschel-Bulkley equation is a generalized model of a non-Newtonian fluid, in which the strain experienced by the fluid is related to the stress in a non-linear way.

Preferably, the SPI when dispersed in water at 10 wt.% concentration an at pH to 6.6, has a non-Newtonian viscoelastic behavior and shear thinning properties whose time-averaged rheological properties can be described by a Herschel-Bulkley rheological model according to Equation 3

$$\tau = \tau_y + K\dot{\gamma}^n \qquad \textit{Equation 3}$$

wherein

$\tau$ is the shear stress (expressed in Pa),
$\dot{\gamma}$ is the shear rate (expressed in s$^{-1}$),
$\tau_y$ is the yield stress and has a value of from 2.3 to 3.3 Pa,
K is the consistency factor and has a value of from 1.9 to 5.8 Pa s$^n$, and
n is the flow index and has a value of from 0.3 - 0.6.

In particular, said rheological properties are determined by dispersing the SPI in water at 10 wt.% concentration using first a High-Shear Mixer (HSM) equipped with the general-purpose disintegrating head at 4000 rpm for 5 min, then adjusting the pH to 6.6 under continuous mixing at an rpm of 3000, followed by incubation for 1h in a water bath at 50°C. More particularly as described in Example 2.2.

The expression "when dispersed in water at pH 6.6" as used herein refers to a dispersion of the SPI in water, preferably distilled water, and which may further comprise a pH adjusting agent so that the pH of the dispersion is 6.6, such as citric acid.

The term "viscous" as used herein refers to the resistance of a fluid or semi-fluid to deformation or flow under an applied stress, where more viscous refers to greater resistance and less viscous refers to less resistance. A fluid is considered "viscous" if the viscosity at a shear rate of 100 $s^{-1}$ is at least or greater than 0.01 Pa s.

In a particular embodiment, the SPI comprised in the solid plant-based food product according to the invention i) does not comprise a Glycinin G5 protein and/or soybean glycinin A3-B4 subunit; or ii) does not comprise a sucrose-binding protein.

In another particular embodiment, the SPI comprised in the solid plant-based food product according to the invention i) does not comprise a Glycinin G5 protein and soybean glycinin A3-B4 subunit; or ii) does not comprise a sucrose-binding protein

In another particular embodiment, the SPI comprised in the solid plant-based food product according to the invention comprises a set of proteins and/or protein fragments wherein the set of proteins and/or protein fragments is selected from one of the following sets:

1) glycinin G2, glycinin G1, glycinin G4, alpha subunit of beta conglycinin, cupin type-1 domain-containing protein, Alpha' subunit of beta-conglycinin, glycinin G3, beta-conglycinin beta subunit 2, beta subunit of beta conglycinin, lipoxygenase, sucrose-binding protein, and 34 kDa maturing seed protein; and

2) glycinin G2, glycinin G1, glycinin G4, alpha subunit of beta conglycinin, cupin type-1 domain-containing protein, Alpha' subunit of beta-conglycinin, glycinin G3, beta-conglycinin beta subunit 2, glycinin G5, beta subunit of beta conglycinin, soybean glycinin A3-B4 subunit, lipoxygenase, and 34 kDa maturing seed protein.

The SPI comprising the set of proteins and/or protein fragments listed above as set 1) does not comprise a Glycinin G5 protein and/or soybean glycinin A3-B4 subunit, in particular it does not comprise a Glycinin G5 protein and soybean glycinin A3-B4 subunit. The SPI comprising the set of proteins and/or protein fragments listed above as set 2) does not comprise a sucrose-binding protein.

The SPI comprise proteins and/or protein fragments which are defined according to the sequences as defined in the corresponding accession number of the Uniprot database presented in Table 1 below. The identification of the proteins and/or protein fragments which are comprised in the SPI can be carried out by known methods in the field of protein sequencing, as the expert is aware. Examples of methods for protein sequencing, without limitation, are as described in Example 4.

The term "protein fragment" as used herein is well understood to those skilled in the art and generally refers to those polypeptides comprising an amino acid sequence that only constitutes a portion of a whole protein molecule, wherein said amino acid sequence is of at least 4 amino acids up to n-1 amino acids, wherein n is the length of the complete protein sequence as defined in Table 1. In a preferred embodiment the protein fragment has a length of at least 4, at least 10, at least 100, at least 100, at least 200, at least 300 amino acids. In another embodiment the protein fragment has a length of less or equal to n-1, n-10, n-100, n-200, n-300, wherein n equals to the length of the complete protein sequence and wherein the length of the protein fragment is never smaller than 4 amino acids.

Table 1 - Proteins present in the soy protein isolates (all database entry versions are from February 22, 2023).

| Protein names | Database entry |
|---|---|
| Glycinin G2 | Sequence according to the accession number P04405 of the UniProt database, entry version 130 |
| Glycinin G1 | Sequence according to the accession number P04776 of the UniProt database, entry version 146 |
| Glycinin G4 | Sequence according to the accession number P02858 of the UniProt database, entry version 134 |
| Alpha subunit of beta conglycinin | Sequence according to the accession number O22120 of the UniProt database, entry version 72 |

(continued)

| Protein names | Database entry |
|---|---|
| Cupin type-1 domain-containing protein | Sequence according to the accession number A0A0R0GMV1, I1L860 or I1JF86 of the UniProt database, entry version 36, 76 or 57, respectively |
| Alpha' subunit of beta-conglycinin | Sequence according to the accession number Q9FZP9 of the UniProt database, entry version 71 |
| Glycinin G5 | Sequence according to the accession number P04347 of the UniProt database, entry version 128 |
| Glycinin G3 | Sequence according to the accession number P11828 of the UniProt database, entry version 125 |
| Beta-conglycinin beta subunit 2 | Sequence according to the accession number F7J077 of the UniProt database, entry version 82 |
| Beta subunit of beta conglycinin | Sequence according to the accession number O22121 of the UniProt database, entry version 79 |
| Soybean glycinin A3-B4 subunit | Sequence according to the accession number Q39858 of the UniProt database, entry version 84 |
| Lipoxygenase (EC 1.13.11.-) | Sequence according to the accession number B3TDK6, Q39870, or B3TDK4 of the UniProt database, entry version 107, 137, or 76, respectively |
| Sucrose-binding protein (SBP) | Sequence according to the accession number Q04672 of the UniProt database, entry version 90 |
| 34 kDa maturing seed protein (Bd 30K) | Sequence according to the accession number O64458 of the UniProt database, entry version 142 |

As shown in the examples, the SPI present in the solid plant-based food product unexpectedly allow obtaining a food product having improved textural parameters, such as hardness, yield point and Young's modulus.

The SPI used in the present invention is commercially available or obtained through a process that comprises alkali solution extraction, separation, acidification, separation washing, neutralization, heat treatment, cooling and spray drying. The detailed extraction process is as follows:

- The soybeans are first cleaned, cracked, and dehulled to remove the outer shell of the bean.
- Defatting: The defatting process removes the oil from the cleaned, cracked, and dehulled soybeans, which helps to concentrate the protein. This is commonly done using hexane, but it can also be carried out by mechanical methods such as pressing or centrifugation.
- Separation: When a solvent, such as hexane, is used in the defatting step, the resulting mixture of oil and solvent is separated from the remaining solids (the defatted soybean) by centrifugation.
- Extraction: The defatted soybean fraction obtained from the previous steps and water are mixed at a ratio of 1:2 to 1:9 at a temperature of 10 to 40 °C. An alkali solution (aqueous sodium hydroxide or aqueous potassium hydroxide) is added to adjust the pH to from 7.0 to 9.0, then the solution is optionally stirred at high speed for 15 to 30 min. The alkali-extracted liquid is then separated from the insoluble soybean residues using a filter press or centrifuge, preferably by centrifugation. The resulting solution contains the dissolved proteins, whilst the solid residue is discarded.
- Acidification: The protein extract is then acidified to precipitate and form curds at a pH near the isoelectric point (pH 4.2 - 4.8). The precipitated proteins form a curd and are then separated by mechanical decanting or centrifugation.
- Washing: the curd is washed with water to remove any remaining impurities, such as residual alkaline solution.
- Neutralization: The washed curds precipitated from the acidic solution are then adjusted to 7.0 to 9.0.
- The slurry obtained in the previous step is heat treated at a temperature of 100 to 150 °C for 2 to 5 min, and cooled to 60 to 70 °C by a heat exchange system.
- The protein solution is spray-dried to obtain a soybean protein powder.

Preferably, the soybeans used for the preparation of the SPIs are from *Cultivar Shengfeng* or *Cultivar Asgrow*.

The amount of SPI present in the plant-based food product of the invention is from 15 to 30 wt.% with respect to the total weight of the food product. SPI content not greater than 30 wt.% form homogeneous and cohesive mixtures which are shapable, and thus can be used in the present invention. SPI contents above this upper limit, resulted in a dry and inhomogeneous granular powder. In one embodiment, the amount soy protein isolate present in the plant-based food product of the invention is from 15 to 18 wt.% with respect to the total weight of the food product. In another embodiment, the amount soy protein isolate present in the plant-based food product of the invention is from 18 to 26 wt.% with respect to the total weight of the food product. In another embodiment, the amount soy protein isolate present in the plant-based food product of the invention is from 26 to 30 wt.% with respect to the total weight of the food product.

The solid plant-based food product of the invention also comprises from 0.5 to 40 wt.% of oil with respect to the total weight of the solid plant-based food product, preferably from 0.5 to 35 wt.%, more preferably form 0.5 to 30 wt.%, more preferably from 0.5 to 25 wt.%, more preferably from 0.5 to 20 wt.%, more preferably from 0.5 to 15 wt.%, still more preferably from 0.5 to 10 wt.%, even more preferably from 0.5 to 5 wt.%. An oil content above 40 wt.% leads to a phase separation of the components and, thus, is unsuitable for the food product of the invention.

The oil is as previously defined; preferably the oil is selected form the group consisting of olive oil, sunflower oil, peanut oil, safflower oil, sesame oil, corn oil, canola oil, soybean oil, linseed oil, castor oil, Tung oil, hemp seed oil, almond oil and mixtures thereof; more preferably the oil is olive oil.

In a preferred embodiment, the maximum oil wt.% is calculated with Equation 1:

$$Maximum\,oil\,wt\% = 219 - 9.37x_p - 10.2pH + 0.155x_p^2 \qquad Equation\,1$$

wherein $x_p$ is the wt.% of soy protein isolate and the pH is the pH as adjusted by the acidulant; and wherein the minimum oil content is 0.5 wt.%; wherein the weight percentages are expressed with respect to the total weight of the solid plant-based food product. Should the result of Equation 1 give a negative value or a value lower than 0.5 wt.%, then the oil content in the solid plant-based food product of the invention is 0.5 wt.%. Improved textural parameters of the food product are obtained when using an oil concentration in the range of from 0.5 wt.% to an upper limit determined by Equation 1.

The solid plant-based food product of the invention also comprises from 0 to 1 wt.% of transglutaminase, wherein the wt.% is expressed with respect to the total weight of the solid plant-based food product. The inventors have found that transglutaminase concentrations above 1 wt.% produced textures with excessive hardness, tendency to syneresis (gel contraction combined with expulsion of liquid), and very granular and rough mouthfeel.

Transglutaminase (EC 2.3.2.13) refers to an enzyme that in nature primarily catalyzes the formation of an isopeptide bond between γ-carboxamide groups of glutamine residue side chains and the ε-amino groups of lysine residue side chains with subsequent release of ammonia. Lysine and glutamine residues must be bound to a peptide or a protein so that this cross-linking (between separate molecules) or intramolecular (within the same molecule) reaction can happen.

Preferably, the solid plant-based food product of the invention comprises from 0 to 0.9 wt.% of transglutaminase with respect to the total weight of the solid plant-based food product, preferably from 0 to 0.8 wt.%, more preferably from 0 to 0.7 wt.%, more preferably from 0 to 0.6 wt.%, more preferably from 0 to 0.5 wt.%, more preferably from 0 to 0.4 wt.%, more preferably from 0 to 0.3 wt.%, more preferably from 0 to 0.2 wt.%, still more preferably from 0 to 0.1 wt.% of transglutaminase. The value of 0 wt.% means that transglutaminase is absent. In other embodiments, the solid plant-based food product of the invention comprises from 0.036 to 1 wt.% of transglutaminase with respect to the total weight of the solid plant-based food product, preferably from 0.036 to 0.9 wt.%, more preferably from 0.1 to 0.036 wt.%, more preferably from 0.036 to 0.7 wt.%, more preferably from 0.036 to 0.6 wt.%, more preferably from 0.036 to 0.5 wt.%, more preferably from 0.036 to 0.4 wt.%, more preferably from 0.036 to 0.3 wt.%, still more preferably from 0.036 to 0.2 wt.%, even more preferably from 0.036 to 0.1 wt.%.

The solid plant-based food product of the invention also comprises an acidulant to adjust the pH of the solid plant-based food product to from 5 to 8, preferably to adjust the pH of the solid plant-based food product to from 5.4 to 7.8, more preferably from 6 to 7.5, more preferably from 6.3 to 7.3, still more preferably from 6.5 to 7.3. In one embodiment, the acidulant is present in an amount to adjust the pH of the solid plant-based food product to from 6 to 8. In another embodiment, the acidulant is present in an amount to adjust the pH of the solid plant-based food product to from 5.1 to 8. In another embodiment, the acidulant is present in an amount to adjust the pH of the solid plant-based food product to from 5 to 6.6.

The acidulant is as previously defined. Preferably the acidulant is citric acid, more preferably wherein the source of citric acid is concentrated lemon juice.

The expression "concentrated lemon juice" (LJC) refers to an acidulant obtained from the juice of lemons which has been concentrated through an evaporation process. The degree of concentration is determined by Brix degree. Brix degree is a unit of measurement used to indicate the amount of soluble solids in a solution. To measure the Brix degree of a solution, a refractometer is commonly used. A refractometer measures the degree to which light bends as it passes through a liquid, which is directly related to the concentration of dissolved solids in the liquid. The Brix degree can then be read off a scale on the refractometer. The LJC product referred to by the researchers has a Brix degree range of 47 - 59 ° Bx. The Association of Official Analytical Chemists (AOAC) provides a method for measuring the Brix degree in fruit juices and other products in its official methods of analysis [AOAC International. (2019). Official Methods of Analysis of AOAC International (21st ed.). Rockville, MD: AOAC International].

Preferably, the concentrated lemon juice has a Brix degree of 47 to 59 ° Bx, more preferably of 51 to 55 ° Bx, still more preferably 53° Bx.

Preferably, the concentrated lemon juice has a pH of 1.8 to 2.5, more preferably of 1.9 to 2.2, still more preferably 2.1.

Preferably, the concentrated lemon juice has an acidity of 33 to 40 % w/w expressed as a percentage equivalent of citric acid, more preferably of 34 to 36 % w/w (expressed as a percentage equivalent of citric acid), still more preferably 35 % w/w.

In one embodiment, concentrated lemon juice with a Brix degree of 47 to 59 ° Bx, a pH of 1.8 to 2.5, and an acidity of 33 to 40 % w/w (expressed as a percentage equivalent of citric acid) was used as an acidulant.

In one embodiment, concentrated lemon juice with a Brix degree of 51 to 55 ° Bx, a pH of 1.9 to 2.2, and an acidity of 34 to 36 % w/w (expressed as a percentage equivalent of citric acid) was used as an acidulant.

In one embodiment, concentrated lemon juice with a Brix degree of 53 ° Bx, a pH of 2.1 and an acidity of 35 % w/w (expressed as a percentage equivalent of citric acid) was used as an acidulant.

In one embodiment, in the solid plant-based food product according to the invention: the soy protein isolate is present in an amount of from 15 to 18 wt.% with respect to the total weight of the solid plant-based food product;

the acidulant is present in an amount to adjust the pH of the product to from 6 to 8; and
the maximum oil wt.% is calculated with Equation 1:

$$Maximum\ oil\ wt.\% \ = \ 219 - 9.37x_p - 10.2pH + 0.155x_p^2 \qquad Equation\ 1$$

wherein $x_p$ is the wt.% of soy protein isolate and the pH is the pH as adjusted by the acidulant.

In another embodiment, in the solid plant-based food product of the invention:

the soy protein isolate is present in an amount of from 18 to 26 wt.% with respect to the total weight of the solid plant-based food product;
the acidulant is present in an amount to adjust the pH of the solid plant-based food product to from 5.1 to 8; and
the maximum oil wt.% is calculated with Equation 1:

$$Maximum\ oil\ wt.\% \ = \ 219 - 9.37x_p - 10.2pH + 0.155x_p^2 \qquad Equation\ 1$$

wherein $x_p$ is the wt.% of soy protein isolate and the pH is the pH as adjusted by the acidulant.

In another embodiment, in the solid plant-based food product according to the invention: the soy protein isolate is present in an amount of from 26 to 30 wt.% with respect to the total weight of the solid plant-based food product;

the acidulant is present in an amount to adjust the pH of the solid plant-based food product to from 5 to 6.6; and
the maximum oil wt.% is calculated with Equation 1:

$$Maximum\ oil\ wt.\% \ = \ 219 - 9.37x_p - 10.2pH + 0.155x_p^2 \qquad Equation\ 1$$

wherein $x_p$ is the wt.% of soy protein isolate and the pH is the pH as adjusted by the acidulant.

Should the result of Equation 1 of the above embodiments give a negative value or a value lower than 0.5 wt.%, then the oil content in the solid plant-based food product of the invention is 0.5 wt.%.

Preferably, in the above embodiments, the minimum oil content is 0.5 wt.% with respect to the total weight of the solid plant-based food product.

The solid plant-based food product of the invention also comprises from 0.1 to 5 wt.% of a salt selected from the group consisting of NaCl, KCl and mixtures thereof, wherein the wt.% is expressed with respect to the total weight of the solid plant-based food product. preferably from 0.1 to 2.5 wt.%. Salt concentrations above 5 wt.% render the food product taste too salty to the point of being inedible. Preferably, the salt is NaCl.

The solid plant-based food product of the invention also comprises from 30 to 85 wt.% of water with respect to the total weight of the solid plant-based food product; preferably from 40 to 85 wt.%, still more preferably from 45 to 85 wt.%.

In a particular embodiment, in the solid plant-based food product of the invention, the soy protein isolate is present in an amount of from 15 to 18 wt.% with respect to the total weight of the solid plant-based food product; the salt is present in an amount of 0.1 to 1 wt.% and the acidulant is added in an amount to adjust the pH of the solid plant-based food product to from 6.2 to 8, wherein the wt.% are expressed with respect to the total weight of the solid plant-based food product.

In another particular embodiment, in the solid plant-based food product of the invention, the soy protein isolate is present in an amount of from 18 to 26 wt.% with respect to the total weight of the solid plant-based food product; the salt is present in an amount of 0.1 to 1 wt.% and the acidulant is added in an amount to adjust the pH of the solid plant-based food product to from 5.5 to 8, wherein the wt.% are expressed with respect to the total weight of the solid plant-based food product.

In another particular embodiment, in the solid plant-based food product of the invention, the soy protein isolate is present in an amount of from 26 to 30 wt.% with respect to the total weight of the solid plant-based food product; the salt is present in an amount of 0.1 to 1 wt.% and the acidulant is added in an amount to adjust the pH of the solid plant-based food product to from 5.5 to 6.6, wherein the wt.% are expressed with respect to the total weight of the solid plant-based food product.

In another particular embodiment, in the solid plant-based food product of the invention, the soy protein isolate is present in an amount of from 15 to 18 wt.% with respect to the total weight of the solid plant-based food product; the salt is present in an amount of 1 to 1.5 wt.% and the acidulant is added in an amount to adjust the pH of the solid plant-based food product to from 6 to 7.8, wherein the wt.% are expressed with respect to the total weight of the solid plant-based food product.

In another particular embodiment, in the solid plant-based food product of the invention, the soy protein isolate is present in an amount of from 18 to 26 wt.% with respect to the total weight of the solid plant-based food product; the salt is present in an amount of 1 to 1.5 wt.% and the acidulant is added in an amount to adjust the pH of the solid plant-based food product to from 5.2 to 7.5, wherein the wt.% are expressed with respect to the total weight of the solid plant-based food product.

In another particular embodiment, in the solid plant-based food product of the invention, the soy protein isolate is present in an amount of from 26 to 30 wt.% with respect to the total weight of the solid plant-based food product; the salt is present in an amount of 1 to 1.5 wt.% and the acidulant is added in an amount to adjust the pH of the solid plant-based food product to from 5.2 to 6.4, wherein the wt.% are expressed with respect to the total weight of the solid plant-based food product.

In another particular embodiment, in the solid plant-based food product of the invention, the soy protein isolate is present in an amount of from 15 to 18 wt.% with respect to the total weight of the solid plant-based food product; the salt is present in an amount of 1.5 to 5 wt.% and the acidulant is added in an amount to adjust the pH of the solid plant-based food product to from 6 to 7.8, wherein the wt.% are expressed with respect to the total weight of the solid plant-based food product.

In another particular embodiment, in the solid plant-based food product of the invention, the soy protein isolate is present in an amount of from 18 to 26 wt.% with respect to the total weight of the solid plant-based food product; the salt is present in an amount of 1.5 to 5 wt.% and the acidulant is added in an amount to adjust the pH of the solid plant-based food product to from 5.1 to 7.5, wherein the wt.% are expressed with respect to the total weight of the solid plant-based food product.

In another particular embodiment, in the solid plant-based food product of the invention, the soy protein isolate is present in an amount of from 26 to 30 wt.% with respect to the total weight of the solid plant-based food product; the salt is present in an amount of 1.5 to 5 wt.% and the acidulant is added in an amount to adjust the pH of the solid plant-based food product to from 5 to 6.4, wherein the wt.% are expressed with respect to the total weight of the solid plant-based food product.

Preferably, in the solid plant-based food product according to the invention, the oil is olive oil, the acidulant is citric acid (preferably wherein the source of citric acid is lemon juice), and the salt is NaCl.

The solid plant-based food product according to the invention may be further comprising of one or more ingredients selected from the group consisting of natural fibers, flours from grains, colorants, flavoring agents, vitamins, and minerals.

Examples of natural fibers are apple fiber, pea fiber, citrus fiber, bamboo fiber, and oat fiber.

Examples of flours from grains are corn flour, spelt flour, wheat flour (all-purpose, cake flour, bread flour, pastry flour, whole wheat, durum wheat semolina flour), chickpea flour, rye flour, potato flour, almond flour, coconut flour, quinoa flour, buckwheat flour, barley flour, rice flour, and oat flour.

Examples of colorants are Annatto, beetroot powder, caramel color, chlorophyll, carotenoids, Turmeric powder, and Spirulina.

Examples of flavoring agents are herbs and spices, flavor components, extracts, essential oils, sweeteners, and preservatives.

Examples of vitamins are, Vitamin A, B Vitamins, Vitamin C, Vitamin D, Vitamin E and Vitamin K.

Examples of minerals are iron, magnesium, calcium, potassium, selenium, and zinc.

In a preferred embodiment, the solid plant-based food product according to the invention is devoid of methylcellulose, carrageenan, agar, locus bean gum, guar gum, konjac gum, xanthan gum, gellan gum, and/or hydroxypropylmethylcellulose. Preferably, the solid plant-based food product according to the invention is devoid of methylcellulose, carrageenan, agar, locus bean gum, guar gum, konjac gum, xanthan gum, gellan gum, and hydroxypropylmethylcellulose.

More preferably, the solid plant-based food product according to the invention is devoid any gelling agent. As used herein, "gelling agent" refers to a food additive used to thicken and stabilize food, providing the foods with texture through formation of a gel. Examples of gelling agents include gums (such as carrageenan, agar, locus bean gum, guar gum, konjac gum, xanthan gum, and gellan gum), pectins, agar-agar and gelatin.

In a particular embodiment, the solid plant-based food product according to the invention is devoid of thickeners. As used herein, the term "thickener" refers to a food additive which increases the viscosity of the food product. Gelling agents are examples of thickeners. Other examples of thickeners are modified starches, carrageenan, soy lecithin, Agar, Xanthan gum, cellulose gum, gum Arabic, and Konjac flour. Flours and proteins from plant sources are not encompassed by the term "thickener".

In a particular embodiment, the solid plant-based food product according to the invention is devoid of emulsifiers. As used herein, the term "emulsifier" refers to a food additive that stabilizes an emulsion by reducing the oil-water interfacial tension and/or by providing a steric barrier between emulsified droplets. Examples of synthetic emulsifiers are polysorbates, mono- and diglycerides, sorbitol monostearate, sodium stearoyl lactylate, esters of propylene glycol or polyglycerol, and glyceryl monostearate. Proteins are not encompassed by the term "emulsifier".

In another particular embodiment, the solid plant-based food product according to the invention is devoid of gelling agents, thickeners, and emulsifiers.

In a particular embodiment, the solid plant-based food product according to the invention is devoid of one or more of the following components: agar, alginate or a salt thereof (such as ammonium alginate, calcium alginate, potassium alginate, sodium alginate, sodium and calcium alginate), alginic acid, alpha-butyl-omega-hydroxypoly(oxyethylene) poly(oxypropylene), alpha-hydro-omega-hydroxypoly(oxyethylene) poly(oxypropylene)poly(oxyethylene) (15 mole minimum) blocked copoylmer, alum (double sulfate of Al and $NH_4$, K or Na), aluminum salts of fatty acid, arabinogalactan, Baker's yeast glycan, bentonite, calcium salts of fatty acid, carboxymethylcellulose, carboxymethylcellulose sodium salt, carboxymethyl hydroxyethyl cellulose, carrageenan and salts thereof (such as salts ammonium, calckum, potassium, sodium salts), casein, cellulose and derivatives thereof (such as cellulose acetate, methyl cellulose, methyl ethyl cellulose, ethyl cellulose, hydroxypropyl cellulose, hydroxypropyl methyl cellulose), cobalt sulfate, curdlan desoxycholic acid, diethanolamide condensates from vegetable oils (such as diethanolamide condensate from soybean oil fatty acids (C16-C18) and diethanolamide condensate from stripped coconut oil fatty acids (C10-C18)), dimethylpolysiloxane, di-N-alkyl(C8-C18) dimethyl ammonium chloride, dioctyl sodium sulfosuccinate, dipotassium phosphate, disodium citrate, disodium inosinate, D-sorbitol, ethyl alcohol, ethylene oxide polymers and copolymers (such as ethylene oxide and propylene oxide copolymers), ferrous sulfate, furcelleran and salts thereof (such as ammonium, calcium potassium and sodium salt), vegetable gums (such as gellan gum, ghatti gum, guar gum, arabic gum, karaya gum, oat gum, locus bean gum, tragacanth gum and xanthan gum), glycerin and derivatives thereof (such as glyceryl lactoolate, glyceryl lactopalmitate, glyceryl monooleate, glyceryl monostearate, glyceryl-lacto esters of fatty acids), isoparaffinic petroleum hydrocarbons, lactose, lactylated fatty acid esters of glycerol and propylene glycol, lactylic esters of fatty acids, lecithin and derivatives thereof (such as benzoyl peroxide modified lecithin, hydrogen peroxide modified lecithin and hydroxylated lecithin), magnesium salts of fatty acids, maltodextrin, methyl glucoside-coconut oil ester, mineral oil, mono and diglycerides and derivatives thereof (such as acetic acid esters and sodium and calcium salts, acetyltartaric acid esters and sodium and calcium salts, ethoxylated mono and diglycerides, monoglyceride citrate, acetylated mono and diglycerides, citric acid esters and sodium and calcium salts, lactic acid esters and sodium and calcium salts, monosodium phosphate derivatives), oxystearin, pectin, petrolatum, petroleum wax, polyethyleneglycol, polyoxyethylene dioleate, polyoxyethylene monoricinoleate, polyoxyethylene monostearate, polyoxyethylene dioleate, polypropylene glycol, polyvinylpyrrolidone, polysorvates (such as polysorbate 20, polysorbate 60, polysorbate 65 and polysorbate 80), potassium salts of fatty acids, propylene glycol and derivatives thereof (such as propylene glycol alginate, propylene glycol mono and diesters of fats and fatty acids, propylene glycol stearate), hydrogenated/partially hydrogenated rapeseed oil, silica aerogel, sodium salts of fatty acids, sorbitan monooleate, sorbitan monostearate, modified starches, stearyl citrate, stearyl monoclyceridyl citrate, succinylated monoglycerides, succistearin, sucrose fatty acid esters, sucrose oligoesters, and trisodium citrate.

As used herein, the term "devoid" refers to as being substantially free of the corresponding ingredient, i.e. less than 1 wt.% of the corresponding ingredient with respect to the total weight of the solid plant-based food product, preferably less than 0.5 wt.%, even more preferably less than 0.1 wt.%, even more preferably 0 wt.%.

Process for the manufacture of the solid plant-based food product

In the second aspect, the invention relates to a process for the manufacture of a solid plant-based food product according to the first aspect, wherein the process comprises:

a) mixing the oil and a first part of the water to form a premix at a temperature of from -2 to 25 °C, preferably at a temperature of from -2 to 2 °C, even more preferably wherein the water is preferably provided as a mixture of water and ice;
b) adding the soy protein isolate to the premix obtained in step a);
c) shearing the mixture obtained in step b) until the temperature in the mixture is from 2 to 42 °C higher than the temperature in the mixture obtained in step b);
d) if the solid plant-based food product comprises transglutaminase, adding the transglutaminase and a second part of the water to the mixture obtained in step c) and mixing to obtain a homogenous mixture;
e) if the solid plant-based food product comprises transglutaminase, shaping the mixture obtained in the previous step d) and subjecting the shaped mixture to a heat treatment wherein the core temperature reaches from 40 to 60 °C for 1 to 10 minutes, and subsequently to a heat treatment wherein the core temperature reaches from 65 to 95 °C for 3 to 10 minutes, or if the solid plant-based food product does not comprise transglutaminase, shaping the mixture obtained in the step c) and subjecting the shaped mixture to a heat treatment wherein the core temperature reaches from 65 to 95 °C for 3 to 10 minutes
f) cooling the mixture obtained in step e) to a temperature in the range of 0 to 10 °C to obtain the solid plant-based food product; and

wherein the acidulant and/or the salt are independently added in step a), between steps a) and b), or in step b), optionally in combination with a third part of the water.

The first step of the process, step a), is mixing the oil and a first part of the water to form a premix at a temperature of from -2 to 25 °C, preferably from -2 °C to 15 °C, more preferably from -2°C to 10 °C, more preferably from -2 °C to 5 °C, still more preferably from -2 to 2 °C.

In a more preferred embodiment, the water in step a) is provided as a mixture of water and ice, preferably in a weight ratio of water to ice of 1:2 to 2:1, more preferably 1:1 .5 to 1.5:1.

The "first part of the water" used in step a) is from 30 to 80 wt.% of the total amount of water present in the food product, preferably from 40 to 60 wt.%. This amount of water includes water and ice.

The oil is as defined in the first aspect.

Step b) is adding the soy protein isolate to the premix obtained in step a). The soy protein isolate is as defined in the first aspect. Preferably, the temperature of step a) is maintained in step b).

The acidulant and/or the salt are independently added in step a), between steps a) and b), or in step b), optionally in combination with a third part of the water, in particular when the acidulant and/or the salt are added between steps a) and b) or step b). The acidulant and salt are as defined in the first aspect.

Thus, in one embodiment, the acidulant and salt are added in step a). In another embodiment, the acidulant and salt are added between steps a) and b). In another embodiment, the acidulant and salt are added in step b). In another embodiment, the acidulant is added in step a) and the salt is added between steps a) and b). In another embodiment the acidulant is added in step a) and the salt is added in step b). In another embodiment, the acidulant is added between steps a) and b) and the salt is added in step a). In another embodiment the acidulant is added between steps a) and b) and the salt is added in step b). In another embodiment the acidulant is added in step b) and the salt is added in step a). In another embodiment the acidulant is added in step b) and the salt is added between steps a) and b.

If the acidulant and/or the salt are not added in step a), they are preferably added in combination with a third part of the water. The "third part of the water" is from 20 to 70 wt.% of the total amount of water present in the food product, preferably from 20 to 50 wt.%.

Preferably, the pH of the mixture obtained once the acidulant has been added (i.e. added in step a), between steps a) and b), or in step b)) is from 5.1 to 7.8.

Step c) is shearing the mixture obtained in step b) until the temperature in the mixture is from 2 to 42 °C higher than in the mixture obtained in step b), i.e. the temperature of the mixture increases from 2 to 42 °C with respect to the initial temperature of the mixture obtained at step b) which corresponds to the temperature at the start of step c), preferably the temperature of the mixture increases by 5 to 20 °C from the temperature of the mixture obtained at step b). Alternatively, the mixture can be sheared until an energy input of from 4.50 to 350 kJ kg$^{-1}$ is obtained, preferably at an energy input of from 16.5 to 280 kJ/kg. This shearing can be carried out in a food processor (e.g. bowl chopper, continuous mixers, high-shear batch mixer, emulsion mills, mincers/grinders, stand mixer, blender). The shearing of step c) is carried out without applying any external heating means. The shearing step causes dissipation of mechanical energy from the mixing action of the food processor to the mixture. This manifests as an increase in temperature of the mixture.

Step d) is only carried out when the solid plant-based food product comprises transglutaminase as defined in the first aspect. If transglutaminase is absent, this step is excluded.

Step d) is adding transglutaminase and a second part of the water to the mixture obtained in step c) and mixing to obtain a homogenous mixture. The mixing can be carried out with any conventional food processing means such as using a food processor (e.g. bowl chopper, continuous mixer, high-shear batch mixer, emulsion mill, mincer/grinder, stand mixer, blender). Preferably, the temperature during step d) is in the range of 0 to 25 °C, more preferably 5 to 18 °C. The expression "homogeneous mixture" refers to a mixture which is visually equal in all of its parts, i.e. without lumps or phase separation.

The "second part of the water" used in step d) is from 1 to 15 wt.% of the total amount of water present in the food product, preferably from 5 to 10 wt.%.

When the acidulant and/or salt are added with water, the first, second and third part of the water used in the process of the invention add up to the total amount of water present in the solid plant-based food product as defined in the first aspect.

When the acidulant and salt are added without water, the first and second part of the water used in the process of the invention add up to the total amount of water present in the solid plant-based food product as defined in the first aspect.

When the solid plant-based food product comprises transglutaminase, step e) is shaping the mixture obtained in the previous step d) and subjecting the shaped mixture to a heat treatment wherein the core temperature reaches from 40 to 60 °C for 1 to 10 minutes, and subsequently to a heat treatment wherein the core temperature reaches from 65 to 95 °C for 3 to 10 minutes; preferably subjecting the shaped mixture to a heat treatment wherein the core temperature reaches from 45 to 55 °C for 1 to 5 minutes, and subsequently to a heat treatment wherein the core temperature reaches from 70 to 90 °C for 3 to 7 minutes

When the solid plant-based food product does not comprise transglutaminase, step e) is shaping the mixture obtained in the step c) and subjecting the shaped mixture to a heat treatment wherein the core temperature reaches from 65 to 95 °C for 3 to 10 minutes, preferably, wherein the core temperature reaches from 70 to 90 °C for 3 to 7 minutes.

The expression "core temperature" refers to the temperature measured at the geometric center of the cross-section of a product, where the cross section is the largest intersection of a plane cutting through the product at a perpendicular angle to the axis of longest dimension of the product. The geometric center follows the classical mathematical definition, i.e. it refers to the arithmetic mean position of all points on the surface of a figure and can be calculated following standard methods: [Subramanian, R. (2010). 1.8 Centroid. In Strength of Materials (2nd Edition). Oxford University Press].

The shaping of step e) may be carried out using any conventional shaping means, such as manual shaping to form cylinders in individual plastic casings, mold castings, forming machines, stamping, or pasta extruders. Preferably wherein the shaping is performed with vacuum sealing. The desired target shape of the final food product is provided in step e). Preferably, the temperature during step e) is in the range of 0 to 40 °C, more preferably 5 to 20 °C.

The heat treatment of step e) can be carried out using any suitable heating means, such as in steam cookers, water baths, retorts, fryers, convection ovens, dryers.

Step f) is cooling the mixture obtained in step e) to a temperature in the range of 0 to 10 °C to obtain the solid plant-based food product, preferably to a temperature in the range of 0 to 4 °C. Step f) can be carried out using any suitable cooling means, such as cooling in cold/ice water baths, chilling rooms, refrigeration, spray chilling, immersion chilling, batch/continuous air coolers, direct contact chillers, vacuum cooling.

In a third aspect, the invention relates to a solid plant-based food product obtainable by the process according to the second aspect.

In a fourth aspect, the invention relates to the use of transglutaminase as cross-linking agent in a solid plant-based food product.

Transglutaminase and solid plant-based food product are as defined in the first aspect. The amount of transglutaminase is also as defined in the first aspect.

As used herein, the term "cross-linking agent" refers to a substance which catalyzes the formation of inter- and intramolecular bonds between and within protein molecules.

The following examples represent specific embodiments of the present invention. They do not intend to limit in any way the scope of the invention defined in the present description.

**Examples**

**Example** 1. Soy **protein isolates**

Example 1.1. Soy protein isolate Cultivar origins and providers

SPI 1 and SPI 2 are soybean proteins isolated from *Cultivar Shengfeng.*

SPI 6, SPI 7 and SPI 8 are soybean proteins isolated from *Cultivar Asgrow.*

Soy protein isolate 3, referring to SPI 3, is a commercial product provided by Bunge, under the commercial reference Bunge Soy Protein Isolate 960T.

Soy protein isolate 4, referring to SPI 4, is a commercial product provided by Bunge, under the commercial reference Bunge Soy Protein Isolate 961T.

Soy protein isolate 5, referring to SPI 5, is a commercial product provided by Shandong Sinoglory Health Food Co., Ltd, under the commercial reference Bunge ISOPRO 510A.

Example 1.2, Extraction process of soy protein isolate SPI 1

The SPI used in the present invention is commercially available or obtained through a process that comprises alkali solution extraction, separation, acidification, washing, neutralization, heat treatment, cooling and spray drying. The soy protein isolate has at least 85.0 wt. % protein on a dry basis.

The detailed extraction process is as follows:

The soybeans are first cleaned, cracked, and dehulled to remove the outer shell of the bean.

Defatting: The defatting process removes the oil from the cleaned, cracked, and dehulled soybeans, which helps to concentrate the protein. This is done using hexane.

Separation: The resulting mixture of oil and solvent is separated from the remaining solids (the defatted soybean) by centrifugation.

Extraction: The defatted soybean fraction obtained from the previous steps and water are mixed in the weight ratio 1:6 at a temperature of approximately 20°C. The alkali solution (sodium hydroxide) is added to adjust the pH to 8.5. The alkali-extracted solution is then separated from the insoluble soybean residues using a centrifuge. The resulting solution contains the dissolved proteins, whilst the solid residue is discarded.

Acidification: The extract obtained from the previous step is then acidified to precipitate and form curds at a pH near the isoelectric point of pH 4.6 (pH 4.5 - 4.8). The precipitated proteins form a curd and are then separated by centrifugation.

Washing: the curd is washed with water to remove any remaining impurities, such as residual alkaline solution.

Neutralization: The washed curds precipitated from solution are then adjusted to pH 8.3. Heating and Spray-drying: The slurry is then heat treated at a temperature of 135°C for 3 min and cooled to 60°C. The slurry is finally spray-dried to obtain a soy protein isolate with no more than 6% humidity.

Example 1.3. Extraction process of soy protein isolate SPI 2

SPI 2 is produced following the procedure described in Example 1.2, except for the following steps:
The alkali-extracted solution is mixed under high shearing for 15-30 min. Moreover, during the acidification process, the pH is adjusted to 4.5.During neutralization, the pH is adjusted to about 7.5.

Example 1.4. Extraction process of soy protein isolate SPI 6

The SPI used in the present invention is commercially available or obtained through a process that comprises alkali solution extraction, separation, acidification, washing, neutralization, heat treatment, cooling and spray drying. The soy protein isolate has at least 85.0 wt. % protein on a dry basis.

The detailed extraction process is as follows:

Defatting: The defatting process removes the oil from the cleaned, cracked, and dehulled soybeans, which helps to concentrate the proteins. The extraction is done using hexane.

Separation: The resulting mixture of oil and solvent is separated from the remaining solids (the defatted soybean) by centrifugation

Extraction: The defatted soybean is diluted with 9 times the weight of water to adjust the pH to 8.0. The alkali-extracted solution is then separated from insoluble soybean residues using a centrifuge. The resulting solution contains the dissolved proteins, whilst the solid residue is discarded.

Acidification: The protein extract is then acidified to precipitate and form curds at a pH near the isoelectric point (pH 4.4 - 4.5). The precipitated proteins form a curd and are then separated by centrifugation.

Washing: the curd is washed with water to remove any remaining impurities, such as residual alkaline solution.

Neutralization: The washed curds precipitated from the acidic solution are then adjusted to pH 7.3.

Heat treatment: The slurry is heated by direct steam to 120°C for sterilization for 4 min, and the temperature of the slurry is reduced to 65°C.

Spray-drying: The slurry is finally spray-dried to obtain a soy protein isolate with no more than 6% humidity.

Example 1.5. Extraction process of soy protein isolate SPI 7

SPI 7 was produced following the procedure described in Example 1.4 except for the following steps:
During the extraction process, the pH is adjusted to 8.9.

Example 1.6. Extraction process of soy protein isolate SPI 8

The SPI used in the present invention is commercially available or obtained through a process that comprises alkali solution extraction, separation, acidification, dilution, alkalinization, heating, enzymatic treatment, neutralization, heat treatment, cooling and spray drying. The soy protein isolate has at least 85.0 wt. % protein on a dry basis.

The detailed extraction process is as follows:

The soybeans are first cleaned, cracked, and dehulled to remove the outer shell of the bean.

Defatting: The defatting process removes the oil from the cleaned, cracked, and dehulled soybeans, which helps to concentrate the protein. The extraction is done using hexane. Separation: The resulting mixture of oil and solvent is separated from the remaining solids (the defatted soybean) by centrifugation.

Extraction: The defatted soybean fraction obtained from the previous steps is mixed with 4 times the weight of water at a pH of 7.2. The alkali solution is added to adjust the pH to about 10. The alkaline solution used for the extraction is sodium hydroxide. The alkali-extracted liquid is then separated from the insoluble soybean residues using a centrifuge. The resulting liquid contains the dissolved proteins, whilst the solid residue is discarded. Acidification: The protein extract is then acidified to precipitate and form curds at a pH near the isoelectric point of 4.5. The precipitated proteins form a curd and are then separated by mechanical decanting or centrifugation.

Dilution: the soy protein curd is diluted with water to form a slurry that is about 15 wt.% solids.

Alkalinization: The pH of the soy protein slurry is then adjusted to approximately 10.2 with sodium hydroxide.

Pre-enzymatic heating: The pH-adjusted soy protein slurry is then heated to a temperature of 55°C and remains constant throughout the addition and reaction of the enzyme. This heating step provides for a more effective and complete enzymatic hydrolysis. Enzymatic reaction: After the soy protein slurry is heated, an enzyme is added to the pH-adjusted soy protein slurry. The enzyme is an alkaline protease, more specifically Alcalase®. The weight of the protease added to the slurry is 0.3% of the weight of the soy protein curd prior to pH adjustment. The period required for effective enzymatic hydrolysis of the soy protein material is 60 minutes. The pH of the resulting hydrolyzed soy protein mixture will move from 10.2 to 8.5.

Neutralization: After enough time passes for completion of the enzymatic hydrolysis, the pH of the enzyme hydrolyzed soy protein mixture is adjusted to 7.0 with hydrochloric acid.

Heating: the soy protein mixture is then heated to a temperature of 150°C for 10 seconds to achieve sterilization.

Cooling: The heated mixture is then cooled down by a vacuum flushing vessel, to a temperature of 55°C for 16 minutes.

Spray-drying: The slurry is finally spray-dried to obtain a soy protein isolate.

Example 2. SPI rheological behavior

Example 2.1. Preparation of protein dispersions

Soy Protein Isolate (SPI) dispersions were prepared as follows: 10 wt.% of SPI was initially hydrated in distilled water at room temperature by mixing with a fork and subsequently dispersing using a High Shear Mixer (HSM) (Silverson, L5M-A) equipped with the general-purpose disintegrating head at 4000 rpm for 5 min. The pH was then adjusted to 6.6 by adding concentrated 1M citric acid in a drop-by-drop manner under continuous mixing in the HSM at 3000 rpm. The pH was measured and adjusted using a pH meter (testo SE & Co). After pH adjustment, the dispersion was divided between two containers containing 100 g each. Transglutaminase (TG) was added in one of the containers to investigate the impact of enzyme addition on rheological behavior. TG was initially dispersed by adding 0.54 g to 25 mL distilled water (concentration 2.16% wt.), where 1 mL of this enzyme dispersion was added to the SPI dispersion for a final concentration of 0.0216 wt.% TG. For samples prepared in the absence of TG, 1 mL of pure distilled water was added instead.

The SPI dispersions (with and without TG) were then poured into two jars and sealed in preparation for heat treatment to ensure enzymatic activation for the dispersion with TG, and equal treatment of samples for that without. The heat treatment consisted of incubation for 1h in a water bath at 50°C. After incubation, the resulting gels were cooled to room temperature in a cold-water bath in preparation for analysis.

The rheological properties of the protein dispersions were assessed using a controlled shear-stress rheometer (Anton Paar GmbH MCR 102e, Graz, Austria) equipped with a 25 mm diameter, smooth parallel plate geometry (PP-25, 25mm diameter) (Anton Paar GmbH, Graz, Austria) with a gap of 1.00 mm. An aliquot of the samples (approximately 1 mL) was briefly homogenized by gentle manual shaking and then poured on the surface of the Peltier with a plastic pipette cut at the tip. The outer plate was mounted above a Peltier plate (C-PTD200, Anton Paar GmbH, Graz, Austria) whose temperature was set to 25°C.

Example 2.2. Flow curve analysis

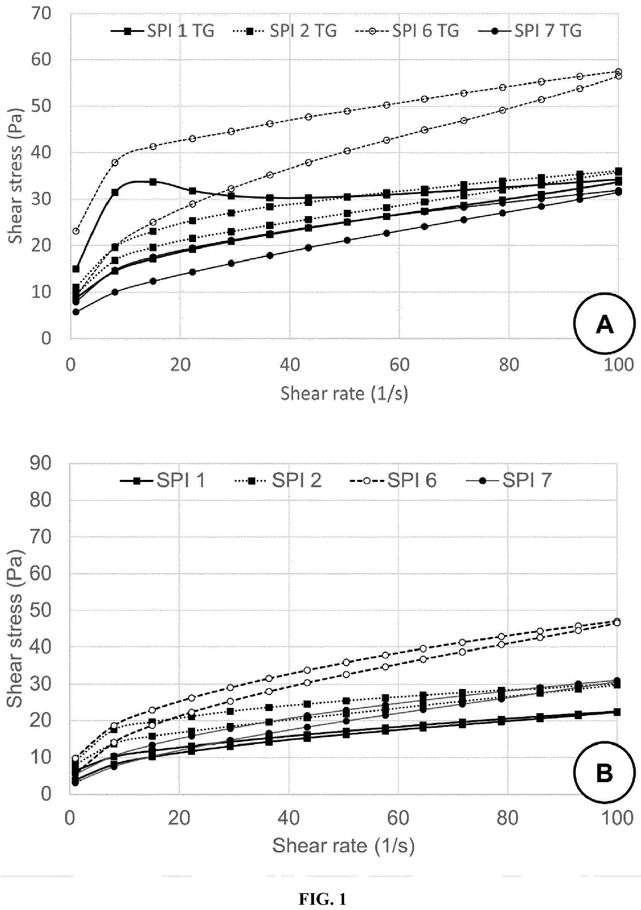

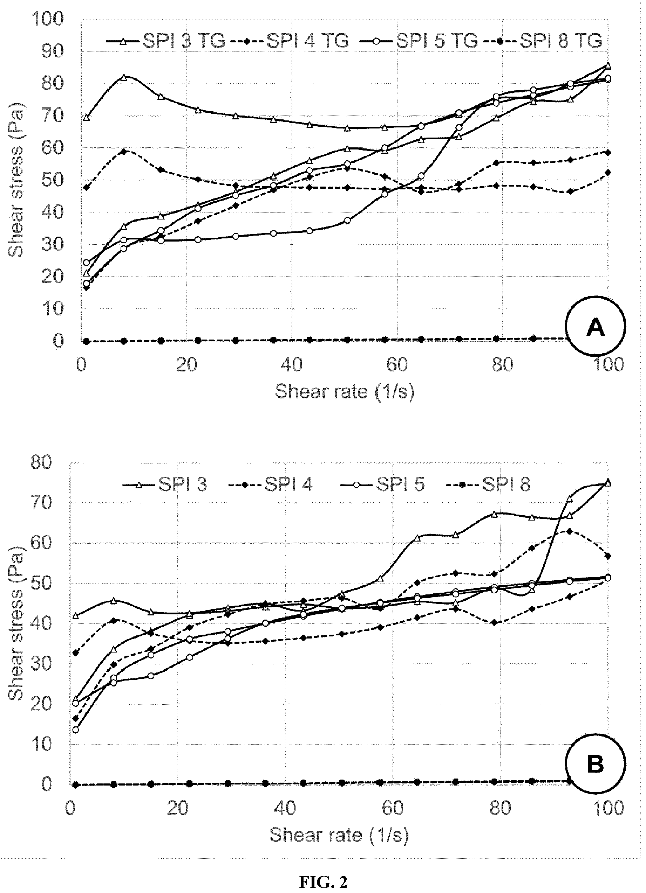

Samples were first subjected to pre-shearing at a shear rate of 1 s$^{-1}$ for 5 min, followed by two shearing steps, from 0.1 to 100 s$^{-1}$ (step 1) and from 100 to 0.1 s$^{-1}$ (step 2). For each step, 15 apparent viscosity readings were recorded at 60 s intervals using the Rheoplus software (Anton Paar GmbH, Graz, Austria). To prevent evaporation, the sample was coated with a layer of mineral oil and covered by a hood equipped with an evaporation blocker. To assess the effect of TG addition on the rheological behavior of each protein, samples with and without TG were studied using flow curve analysis, the results of which are displayed in Figure 1 and Figure 2. In addition, the resulting data was processed using a program written in Matlab, to obtain parameters to fit the Herschel-Bulkley rheological model, those being the yield stress ($\tau_y$), consistency index (K), and flow index (n), which are related as follows:

$$\tau = \tau_y + K\dot{\gamma}^n \qquad\qquad \textit{Equation 3}$$

where $\tau$ is the shear stress (Pa), and $\dot{\gamma}$ is the shear rate (s$^{-1}$). The table below shows a comparison of Herschel-Bulkley fitted parameters of SPI 1, 2, 6 and 7.

| SPI | YIELD STRESS (PA) | CONSISTENCY INDEX (PA S$^N$) | FLOW INDEX | R^2 |
|-----|-------------------|------------------------------|------------|------|
| 1 | 3.30 | 1.97 | 0.49 | 0.93 |
| 2 | 3.22 | 5.73 | 0.33 | 0.84 |
| 6 | 2.95 | 4.82 | 0.48 | 0.93 |
| 7 | 2.39 | 1.93 | 0.58 | 0.94 |

Figure 1 demonstrates the rheological similarity of SPI 1, 2, 6 and 7. These proteins exhibit viscoplastic behavior with shear thinning properties, where the viscosity of the dispersions decreases with the increase of shear rate. These proteins also demonstrated a yield stress, allowing the time-averaged behavior (without TG) to be fit to a Hershel-Bulkley rheological model (Equation 3) to relate shear stress and strain [Fryer, P. (1997). Food Rheology. In P. Fryer, D. Pyle, & C. Rielly, Chemical Engineering for the Food Industry (pp. 195 - 233). Springer Science+Business Media Dordrecht], where the fitted parameters are given in the table above.

SPI 6 showed the highest shear stress, with and without TG in this range of shear rate (0.1 to 100 s$^{-1}$). SPI 1 was significantly impacted by the addition of TG as shown in Figure 1A when comparing to Figure 1B.

Figure 2A and Figure 2B describe the flow curve of SPIs 3, 4, 5 and 8. These figures show that protein 3, 4 and 5 have a rheological behavior which deviates widely from that of SPIs 1, 2, 6 and 7. The flow curve gradients vary widely with shear rate, mainly due to a strong increase of viscosity with increasing shear stress during the measurement, which simultaneously breaks the gel structure. In general, SPIs 3, 4 and 5 show dilatant behavior with shear thickening properties (increase of shear rate leads to an increase of viscosity), which ultimately decreases their processability. The final shear stress was in fact higher for these proteins at the end of the measurement, demonstrating their time-dependent, shear thickening behavior. The addition of TG significantly impacted SPIs 3, 4 and 5 since the initial viscosity (from 0 to 60 s$^{-1}$) was higher in the presence of TG.

In summary, SPIs 3, 4 and 5 have a dilatant behavior with shear thickening properties, whilst SPI 8 demonstrates Newtonian behavior. Only SPIs 1, 2, 6 and 7 describe viscoplastic behavior with shear thinning properties.

**Example 3. SPI physico-chemical characterization using zeta potential and particle size distribution**

Example 3.1. Method of protein dispersion

Protein dispersions were initially prepared by dispersing the SPI powders in distilled water (3 wt.% SPI) for approximately 2 hours under slow stirring at room temperature using a magnetic stirrer (RT2 Basic, Thermo Fisher Scientific, Waltham, USA). The pH of the dispersions was then adjusted to 6.6 using 1 M Citric Acid in a drop-by-drop manner. The 8 dispersions of SPIs 1 to 8 were analyzed by Dynamic Light Scattering (DLS) using a Litesizer™ 500 (Anton Paar, Austria) and by Static Light Scattering using a Mastersizer 3000 (Malvern Instruments Ltd®, UK).

Example 3.2. Zeta potential

The zeta potential (ZP) was determined by Continuous Monitored Phase-Analysis Light Scattering (cmPALS). Measurements of the 3 wt.% SPI dispersions were performed using a Litesizer™ 500 (Anton Paar, Austria). The electrophoretic mobility is obtained by performing an electrophoresis experiment on the SPI dispersions at a set pH and measuring the velocity of the particles using cmPALS. Measurements were performed using distilled water as dispersant, and consisted of 20 runs, with an intercycle delay of 5 seconds. Three measurements per sample were performed. The dispersions were diluted with distilled water using a ratio of 1:100 SPI dispersion to distilled water. The Smoluchowski approximation was used to calculate the zeta potential. Samples were analyzed in triplicate and results were evaluated using Kalliope Software.
The results obtained after measuring the Zeta potential of SPIs 1 to 8 dispersions (3 wt.% dilution ratio 1:100) at pH 6.6 are gathered in the table below.

| Protein | SPI1 | SPI2 | SPI3 | SPI4 | SPI5 | SPI6 | SPI7 | SPI8 |
|---------|------|------|------|------|------|------|------|------|
| ZP (mV) | -37  | -32  | -5   | 0    | -1   | -37  | -36  | -31  |

Example 3.3. Particle size distribution by Static Light Scattering (SLC)

SLS is a technique that measures the intensity of the scattered light of dispersed particles illuminated by a laser beam. Particles are hit by a red beam light ($\lambda$=633 nm) and a blue beam light ($\lambda$=470 nm) and diffract these in all directions. Large particles diffract light on smaller angles with high intensity, whereas small particles diffract light on wider angles with lower intensity. The formulations were analyzed in triplicate by SLS using a MasterSizer 3000 (Malvern Instruments Ltd®, UK). The results were treated using the Mie theory, which assumes that the particles measured are perfect spheres. The protein dispersion samples (3 wt.%) were mixed and dispersed in the LV measuring cell until an obscuration level of 10% was obtained. Measurements were performed in triplicate and the average of the three replicates was reported.
The volume weighted mean diameter D[4,3] of SPIs 1 to 8 dispersions at 3 wt.% concentration at pH 6.6 are gathered in the table below.

| Protein | SPI1 | SPI2 | SPI3 | SPI4 | SPI5 | SPI6 | SPI7 | SPI8 |
|---------|------|------|------|------|------|------|------|------|
| D[4,3] ($\mu m$) | 178 | 113 | 172 | 227 | 138 | 144 | 119 | 51.5 |

The diameter D90 of SPIs 1 to 8 dispersions at 3 wt.% concentration at pH 6.6 are gathered in the table below.

| Protein | SPI1 | SPI2 | SPI3 | SPI4 | SPI5 | SPI6 | SPI7 | SPI8 |
|---------|------|------|------|------|------|------|------|------|
| D90 ($\mu m$) | 345 | 198 | 354 | 430 | 291 | 281 | 236 | 99 |

**Example 4. SPI sequencing**

Example 4.1. Sample preparation and protein digestion

Dry samples of SPIs was resuspended in 8M Urea/50 mM $NH_4HCO_3$ buffer. The samples were sonicated with a Hielscher UP200S ultrasonic processor with 5 bursts (amplitude 30%-amp, cycle 0.5) with cooling every 3 bursts. Samples were kept on ice during the sonication process. The resulting protein extracts were centrifuged at 14000 g for 10 min at 4°C to remove solids. Protein concentration was determined by absorbance detection with Pierce 660 Assay (Thermo Fisher Scientific) following the product instructions. Proteins were reduced (DTT 18 mM; 1h, 32°C) and alkylated (iodoacetamide 25 Mm) at room temperature for 30 minutes in the dark. Afterwards, proteins were digested with trypsin (Sequence grade modified trypsin, Promega) for 2 hours (pH 8, 32°C) with a protease: protein ratio of 1:40 (w/w); after which, the same amount of enzyme was added, and the digestion was allowed to continue overnight under the same conditions. The resulting peptide mixtures were acidulated and cleaned-up with a C18 tip (PolyLC Inc.) as per the manufacturer's protocol. Finally, the cleaned peptide solutions were dried-down and stored at -20°C until the LC-MS analyses.

Example 4.2. Analytical procedure - Liquid Chromatography-MS/MS

The dried-down peptide mixtures were analyzed in a nanoAcquity liquid chromatographer (Waters) coupled to an LTQ-Orbitrap Velos (Thermo Scientific) mass spectrometer. The samples were resuspended in a 1 % FA solution and injected for chromatographic separation. Peptides were trapped on a Symmetry C18TM trap column (5$\mu$m 180$\mu$m x 20mm; Waters) and were separated using a C18 reverse phase capillary column (ACQUITY UPLC BEH column; 130Å, 1.7$\mu$m, 75 $\mu$m x 250 mm, Waters). The gradient used for the elution of the peptides was 1 to 40% B in 60 minutes, followed by gradient from 40% to 60% in 10 minutes (A: 0.1% FA; B: 100% ACN, 0.1%FA), with a 250 nL/min flow rate. Eluted peptides were subjected to electrospray ionization in an emitter needle (Waters) with an applied voltage of 2200 V. Peptide masses (m/z 300-1600) were analyzed in data dependent mode where a full Scan MS was acquired in the Orbitrap with a resolution of 60,000 FWHM at 400m/z. Up to the 15th most abundant peptides (minimum intensity of 500 counts) were selected from each MS scan and then fragmented in the linear ion trap using CID (38% normalized collision energy) with helium as the collision gas. The scan time settings were: Full MS: 250 ms (1 microscan) and MSn: 120 ms. The generated raw data files were collected with Thermo Xcalibur (v.2.2).

Example 4.3. Data analysis: Database search and protein ID

The raw data files obtained in the mass spectrometry analyses were used to search against the public databases SwissProt_GlycineMax merged with a small database containing laboratory contaminants, with SequestHT as the search engine using Thermo Proteome Discoverer (v.1.4.1.14). The following search parameters were applied:

-    Database/Taxonomy: SP_GlycineMAx_221117_cont.fasta.
-    Enzyme: Trypsin.
-    Missed cleavage: 2.
-    Fixed modifications: cabamidomethyl of cysteine.
-    Variable modifications: oxidation of methionine, deamidation of asparagine and glutamine.
-    Peptide tolerance: 10 ppm and 0.6 Da (respectively for MS and MS/MS spectra).

To improve the sensitivity of the database search, Percolator (semi-supervised learning machine) was used to discriminate correct from incorrect peptide spectrum matches. Percolator assigns a q-value to each spectrum, which is defined as the minimal FDR at which the identification is deemed correct. These q-values are estimated using the distribution of scores from the decoy database search.

Example 4.4. Results

The results of the sequencing of the protein isolates (SPI 1 to 7) are presented in the table below. In this table, the number PSM indicates the total number of identified peptide spectra matched for the protein. The PSM value of an identified protein can be correlated with the abundance of this same protein within the analyzed sample. In other words, in this study, a higher PSM value of a protein can be correlated with its high abundance within the protein isolate. Only the proteins identified in the samples with a PSM value > 100 are displayed since they are the most significantly present in the SPIs.

| Accession Number | SPI1 | SPI2 | SPI3 | SPI4 | SPI5 | SPI6 | SPI7 |
|---|---|---|---|---|---|---|---|
| | #PSM | #PSM | #PSM | #PSM | #PSM | #PSM | #PSM |
| P04405 | 714 | 714 | 906 | 744 | 868 | 1296 | 1122 |
| P04776 | 660 | 616 | 702 | 632 | 680 | 1245 | 1007 |

(continued)

| Accession Number | SPI1 | SPI2 | SPI3 | SPI4 | SPI5 | SPI6 | SPI7 |
|---|---|---|---|---|---|---|---|
| | #PSM | #PSM | #PSM | #PSM | #PSM | #PSM | #PSM |
| P02858 | 594 | 581 | 699 | 666 | 645 | 1105 | 776 |
| O22120 | 622 | 598 | 850 | 725 | 738 | 790 | 686 |
| A0A0R0GMV1 | 504 | 509 | 560 | 537 | 578 | 975 | 751 |
| Q9FZP9 | 408 | 403 | 494 | 426 | 490 | 446 | 422 |
| P04347 | 0 | 0 | 404 | 418 | 446 | 578 | 479 |
| P11828 | 357 | 338 | 400 | 333 | 418 | 447 | 458 |
| F7J077 | 287 | 262 | 344 | 364 | 309 | 710 | 466 |
| O22121 | 273 | 249 | 319 | 345 | 292 | 699 | 452 |
| I1L860 | 221 | 210 | 240 | 240 | 209 | 253 | 174 |
| Q39858 | 0 | 0 | 0 | 0 | 0 | 355 | 234 |
| B3TDK6 | 158 | 150 | 208 | 189 | 169 | 254 | 219 |
| Q39870 | 170 | 179 | 204 | 192 | 185 | 182 | 141 |
| Q04672 | 174 | 165 | 192 | 191 | 165 | 0 | 0 |
| I1JF86 | 167 | 169 | 182 | 186 | 169 | 153 | 112 |
| B3TDK4 | 156 | 154 | 179 | 165 | 156 | 161 | 140 |
| O64458 | 150 | 145 | 217 | 170 | 102 | 143 | 141 |

The Accession Numbers in the table above correspond to corresponding accession number of the Uniprot database and having the protein names as described in the table below.

| Protein names | Database entry |
|---|---|
| Glycinin G2 | Sequence according to the accession number P04405 of the UniProt database, entry version 130 |
| Glycinin G1 | Sequence according to the accession number P04776 of the UniProt database, entry version 146 |
| Glycinin G4 | Sequence according to the accession number P02858 of the UniProt database, entry version 134 |
| Alpha subunit of beta conglycinin | Sequence according to the accession number 022120 of the UniProt database, entry version 72 |
| Cupin type-1 domain-containing protein | Sequence according to the accession number A0A0R0GMV1, I1L860 or I1JF86 of the UniProt database, entry version 36, 76 or 57, respectively |
| Alpha' subunit of beta-conglycinin | Sequence according to the accession number Q9FZP9 of the UniProt database, entry version 71 |
| Glycinin G5 | Sequence according to the accession number P04347 of the UniProt database, entry version 128 |
| Glycinin G3 | Sequence according to the accession number P11828 of the UniProt database, entry version 125 |
| Beta-conglycinin beta subunit 2 | Sequence according to the accession number F7J077 of the UniProt database, entry version 82 |
| Beta subunit of beta conglycinin | Sequence according to the accession number O22121 of the UniProt database, entry version 79 |

(continued)

| Protein names | Database entry |
|---|---|
| Soybean glycinin A3-B4 subunit | Sequence according to the accession number Q39858 of the UniProt database, entry version 84 |
| Lipoxygenase (EC 1.13.11.-) | Sequence according to the accession number B3TDK6, Q39870, or B3TDK4 of the UniProt database, entry version 107, 137, or 76, respectively |
| Sucrose-binding protein (SBP) | Sequence according to the accession number Q04672 of the UniProt database, entry version 90 |
| 34 kDa maturing seed protein (Bd 30K) | Sequence according to the accession number O64458 of the UniProt database, entry version 142 |

## Example 5. Food product using different soy protein isolates

Example 5.1. Preparation of the food product

The performance of each soy protein isolate (SPI 1 to SPI 8) within a specific application - cold cut slices in this case - was compared. Thus, model systems were prepared using the 8 different proteins (SPI 1 to 8). The formulations are described in the table below, wherein the % represents the wt.% with respect to the total weight of the formulation.

| SPI | 1 | 2 | 3 | 4 | 5 | 6 | 7 | 8 |
|---|---|---|---|---|---|---|---|---|
| SPI (%) | 22.5 | | | | | | | |
| Liquid Water (%) | 35 | | | | | | | |
| Water ice (%) | 35 | | | | | | | |
| NaCl (%) | 1.50 | | | | | | | |
| Olive oil (%) | 5.0 | | | | | | | |
| Colorants (%) | 0.5 | | | | | | | |
| Lemon Juice Concentrate (%) | 0.50 | 0.00 | 0.25 | 0.00 | 0.25 | 0.25 | 0.25 | 0.25 |
| pH | $6.5 \pm 0.2$ | | | | | | | |
| Transglutaminase (%) | 0.036 | | | | | | | |

SPI dispersions were prepared with a water/ice combination (1:1 ratio) using a food processor (Thermomix® TM6, Vorwerk, Spain M.S.L., S.C.). Initially, the ingredients were weighed out in the correct quantities and added to the process vessel. Before their addition, the colorants were dissolved in 57 wt.% of the required liquid water content using a magnetic stirrer (RT2 Basic, Thermo Fisher Scientific, Waltham, USA), whilst the required portion of acidulant was separately dissolved in 33 wt.% of liquid water. Prior to SPI addition, the oil (extra virgin olive oil (EVOO) provided by Borges, Tárrega, Spain), salt (NaCl), liquid water, and the ice fraction were combined in the process vessel. This pre-mix was then agitated at the Thermo mix speed 1 (S1, 100 rpm) for 20 seconds on forward blade mode. The SPI was subsequently added and mixed in with gradually increasing speed up to speed 3 (S3, 500 rpm) for 30 seconds on reverse blade mode, after which the lid was removed to allow the sides of the vessel to be scraped, ensuring that all the components were incorporated. The mix was then agitated again at speed 4 (S4, 1100 rpm) whilst the mixer settings were switched from reverse to forward mode every 30 seconds until 7 minutes of shearing were completed. Finally, transglutaminase enzyme (TG) (PROBIND TXo, BDF Ingredients, Spain) dissolved in 5 wt.% of the total (liquid and ice) water content was added to the mixture and incorporated for 1 minute at S4, again switching the blades from reverse to forward mode every 30 seconds. The resulting mixtures were vacuum sealed (Zermat BLUESVAC-42+) and placed in a water bath at 50°C to undergo thermal treatment for one hour, followed by another hour at 80°C. The samples were then allowed to cool in a cold-water bath and refrigerated at 4°C overnight.

Example 5.2. Texture profile analysis

The elasticity, hardness, and yield point of the resulting products were examined using a Texture Analyser (TA) TA.XT.Plus C (Stable Micro Systems, Surrey, UK). Six cylindrical pieces were cut out of each sample with a height of approximately 3 cm. The samples were investigated using a 4 mm diameter cylinder probe in a "return to start" puncture test on the Exponent Connect (Stable Micro Systems) software. The probe was set to start the test after a 5 g force trigger was detected, then descended 15 mm into the sample before returning to the start position, with pre-test, post-test, and test speed set to 1 mm/s.

Three key points on the texture profile plots were identified and computed to evaluate and compare the texture of analyzed products, those being the hardness, yield point, and Young's modulus. The "Hardness" of the sample is taken as the maximum force measured by the probe upon puncturing the sample [Hurler, J., Engesland, A., Poorahmary Kermany, B., & Skalko-Basnet, N. (2012). Improved texture analysis for hydrogel characterization: Gel cohesiveness, adhesiveness, and hardness. Journal of Applied Polymer Science, 180-188.]. The "yield point" follows the conventional definition used in the field of materials science, that being the first critical point where the stress strain relationship becomes nonlinear, Indicative of a departure from Hooke's law of elastic deformation [Hu, J., Kumar, B., & Lu, J. (2020). 17.4.1 Stress-Strain Curve. In Handbook of Fibrous Materials, Volume 1-- Production and Characterization/Volume 2-- Applications in Energy, Environmental Science and Healthcare. John Wiley & Sons]. Finally, the Young's modulus is taken as the initial slope of the linear region of the stress/strain curve, giving a measure of the elasticity (or stiffness) of the product: i.e. the extent to which the material can be strained without permanent deformation [Bourne, M. C. (2002). 3.6 Creep Compliance. In Food Texture and Viscosity-- Concept and Measurement (2nd Edition). Elsevier]. In general, it is assumed that a higher value of Young's modulus is indicative of a more brittle material and vice versa.

The above parameters including hardness, yield point, and Young's modulus were calculated and analyzed using user-defined functions written in Matlab (ver. R2022a).

Example 5.3. Results

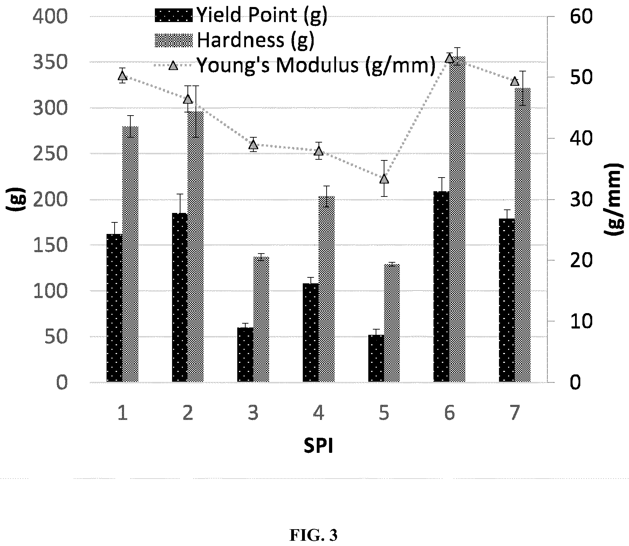

The resulting model products were analyzed in terms of textural performance using methods described above. The results of these evaluations are thus presented in Figure 3.

The results show that the highest values of all measured textural parameters were associated with formulations comprising SPI 1, 2, 6, and 7, whereas the lowest values were found for SPI 3, 4 and 5.

Formulations comprising SPI 1, 2, 6 and 7 were comparable in terms of both elasticity and yield point, which are crucial parameters for stronger and/or more "chewy" food textures Dapčević, Dokić, Hadnadev, & Pojić, (2008). DETERMINING THE YIELD STRESS OF FOOD PRODUCTS - IMPORTANCE AND SHORTCOMINGS. Institute for Food Technology, 35(3), 143-149; and Sinha & Bhargav, (2020). Young's modulus estimation in food samples: effect of experimental parameters. Mechanics & Industry, 404(21)] such as frankfurter sausages and cold cuts.

The hardness, yield point and elasticity of model systems produced from SPIs 3, 4, and 5 were not sufficient to provide a sliceable product - The model systems produced with these proteins are considered not acceptable.

The results of the formulation comprising SPI 8 was not represented in Figure 3 since the final product was too liquid-like to form a solid product and to be analyzed by the TA. This protein is also considered as not acceptable.

Based on the previous results, the inventors have observed that it is the combination of two properties of the SPI (particle size and zeta potential) which provide the targeted texture.

**Example 6. Food product with and without transglutaminase** (TG)

Example 6.1. Preparation of the food product

The performance of the food product with different amounts of transglutaminase was compared. The formulations are described in the table below, wherein the % represent the wt.% with respect to the total weight of the formulation.

| | | | |
|---|---|---|---|
| SPI 1 (%) | 30 | | |
| Liquid water (%) | 19.8 | 19.7 | 19.0 |
| Water ice (%) | 19.8 | 19.7 | 19.0 |
| NaCl (%) | 2.00 | | |
| Olive oil (%) | 25.0 | | |
| Colorants (%) | 0.5 | | |
| Lemon Juice Concentrate (%) | 2.50 | | |

(continued)

| pH | 5.2 | | |
|---|---|---|---|
| Transglutaminase (%) | 0 | 0.036 | 1 |

A product was prepared comprising 30 wt.% SPI 1 (protein content minimum 90% on dry basis according to the manufacturer) 2 wt.% NaCl, adjusting the pH to 5.2 with concentrated lemon juice, at an olive oil concentration of 25 wt.% (extra virgin olive oil (EVOO) provided by Borges, Tárrega, Spain). Three different formulations were prepared, one without TG, and two with different levels of TG enzyme (PROBIND TXo, BDF Ingredients, Spain) (0.036 wt.% and 1 wt.%). The product was prepared following the experimental procedure described above in example 5.1

Example 6.2. Results

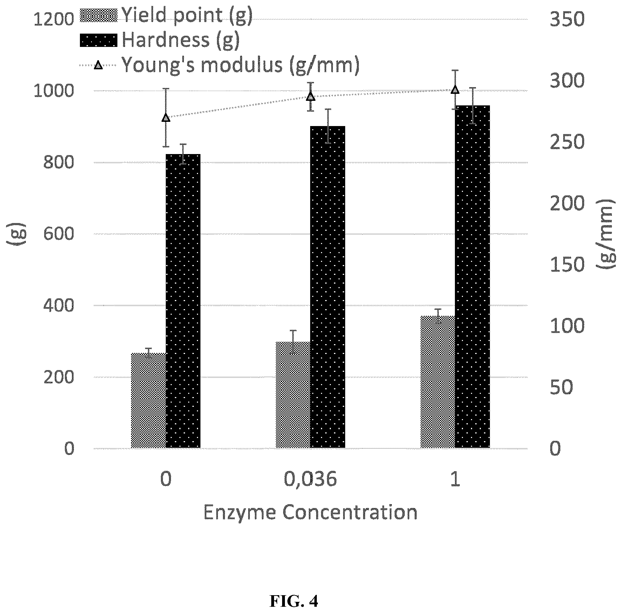

The elasticity, hardness, and yield point of the resulting products were examined following the experimental procedure described above in example 5.2. The results are shown in Figure 4. As it can be seen, by addition of TG the maximum achievable TA parameters in the model systems can be increased from 820 to 960 g (a 17% increase) for Hardness, 370 - 450 g (a 21.6 % increase) for yield point, and 270 - 300 g/mm (an 11% increase) for young's modulus. It was also found (data not shown) that transglutaminase concentrations above 1 wt.% produced textures with excessive hardness, tendency to syneresis (gel contraction combined with expulsion of liquid), and very granular and rough mouthfeel, whilst also giving no more significant improvement in measured textural parameters. Consequently, the usage of the transglutaminase is limited to 1 wt.%.

## Example 7. Food Product with Different Protein Concentrations

Example 7.1. Preparation of the food product

The performance of the food product with different amounts of soy protein isolate was compared. The formulations are described in the table below, wherein the % represents the wt.% with respect to the total weight of the formulation.

| SPI 1 (%) | 20 | 22.5 | 25 |
|---|---|---|---|
| Liquid water (%) | 38.2 | 37.0 | 36.0 |
| Water ice (%) | 38.2 | 37.0 | 36.0 |
| NaCl (%) | 1.50 | | |
| Olive oil (%) | 0.5 | | |
| Colorants (%) | 0.5 | | |
| Lemon Juice Concentrate (%) | 1.00 | | |
| pH | 5.9 | | |
| Transglutaminase (%) | 0.036 | | |

Products were prepared comprising different levels of SPI 1 (protein content minimum 90% on dry basis according to the manufacturer), 1.5 wt.% NaCl, 0.036 wt.% transglutaminase, adjusting the pH to 5.9 with concentrated lemon juice, at an olive oil concentration of 0.5 wt.% (extra virgin olive oil (EVOO) provided by Borges, Tárrega, Spain). Three different formulations were prepared with different levels of SPI 1 (20 wt.%, 22.5 wt.%, and 25 wt.%). The product was prepared following the experimental procedure described above in example 5.1.

Example 7.2. Results

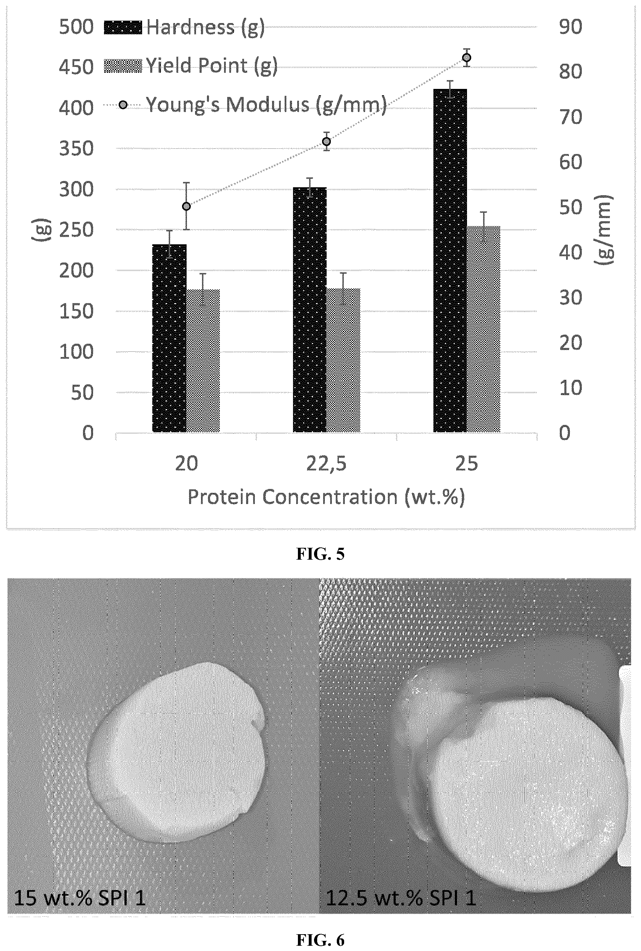

The elasticity, hardness, and yield point of the resulting products were examined following the experimental procedure described above in example 5.2. The results are shown in Figure 5. As it can be seen, all parameters tend to increase across the investigated range in a linear manner. These trends persist with increased/decreased salt concentration and lower pH, where increased SPI concentrations tend to enhance the values of all measured textural parameters.

**Example 8. Establishing the lower limit of Protein Concentrations**

Example 8.1. Preparation of the food product

The performance of the food product at low concentration of soy protein isolate was investigated by visual comparison of two different concentrations. The formulations are described in the table below, wherein the % represents the wt.% with respect to the total weight of the formulation.

| SPI 1 (%) | 12.5 | 15 |
|---|---|---|
| Liquid water (%) | 42.9 | 41.6 |
| Water ice (%) | 42.9 | 41.6 |
| NaCl (%) | 1.00 | |
| Olive oil (%) | 0.5 | |
| Lemon Juice Concentrate (%) | 0.250 | |
| pH | 7.2 | |
| Transglutaminase (%) | 0.036 | |

Products were prepared comprising different levels of SPI 1 (protein content minimum 90% on dry basis according to the manufacturer), 1.00 wt.% NaCl, 0.036 wt.% transglutaminase, adjusting the pH to 7.2 with concentrated lemon juice, at an olive oil concentration of 0.5 wt.% (extra virgin olive oil (EVOO) provided by Borges, Tárrega, Spain). Three different formulations were prepared with two different levels of SPI 1 (12.5 wt.%, and 15 wt.%). The product was prepared following the experimental procedure described above in example 5.1.

Example 8.2. Results

The aim of this exercise was to evaluate which concentrations of protein would cause detriment to the structural integrity of the resultant food products. This was evaluated considering the definition of "solid" given herein, where the system must not be free flowing: i.e. it must be able to hold its shape in the absence of a confining container. Hence, the resultant food products were cut into cylindrical shapes of 3 cm in height and diameter and visually evaluated in terms of their ability to maintain their original shape throughout the cutting and free-standing process, as illustrated in Figure 6. Hence Figure 6 shows that the food product at an SPI concentration of 15 wt.% was able to maintain its shape, whilst the lower concentration of 12.5 wt.% was unable to stand freely without some loss of structural integrity and water leakage, signifying that the maximum water content and water holding capacity of the protein was surpassed in this instance. Hence, the lowest acceptable concentration for the food product is 15 wt.% of SPI.

**Example 9. Food Product with Different Levels of Salt Concentration**

Example 9.1. Preparation of the food product

In order to evaluate whether excessive salt concentration could negatively impact the performance of the food product, products with different amounts of salt were compared. The formulations are described in the table below, wherein the % represents the wt.% with respect to the total weight of the formulation.

| SPI 1 (%) | 20 | | | | | | | | | | |
|---|---|---|---|---|---|---|---|---|---|---|---|
| Liquid water (%) | 34 - 39 (depending on salt level) | | | | | | | | | | |
| Water ice (%) | 34 - 39 (depending on salt level) | | | | | | | | | | |
| NaCl (%) | 0 | 0.1 | 1 | 1.5 | 2 | 1.5 | 3 | 4 | 5 | 6 | 10 |
| Olive oil (%) | 0.5 | | | | | | | | | | |
| Colorants (%) | 0.5 | | | | | | | | | | |
| Lemon Juice Concentrate (%) | 0.5 | | | | | | | | | | |

(continued)

| pH | 6.46 |
|---|---|
| Transglutaminase (%) | 0.036 |

Products were prepared comprising 20 wt.% of SPI 1 (protein content minimum 90% on dry basis according to the manufacturer), 0.036 wt.% transglutaminase, adjusting the pH to 6.46 with concentrated lemon juice, at an olive oil concentration of 0.5 wt.% (extra virgin olive oil (EVOO) provided by Borges, Tárrega,Spain). Ten different formulations were prepared with different salt concentrations (0 wt.%, 0.1 wt.%, 1 wt.%, 1.5 wt.%, 2 wt.%, 2.5 wt.%, 3 wt.%, 4 wt.%, 5 wt.%, 6 wt.%, and 10 wt.%). The product was prepared following the experimental procedure described above in example 5.1.

Example9.2. Results

The aim of this exercise was to evaluate whether particular salt concentrations would cause detriment to the structural integrity of the resultant food products. This was evaluated considering the definition of "solid" given herein, where the system must not be free flowing: i.e. able to hold its shape in the absence of a confining container. Hence, the resultant food products were cut in cylindrical shapes of 3 cm in height and diameter and visually evaluated in terms of their ability to maintain their original shape throughout the cutting and free-standing process:

| NaCl (%) | 0 | 0.1 | 1 | 1.5 | 2 | 2.5 | 3 | 4 | 5 | 6 | 10 |
|---|---|---|---|---|---|---|---|---|---|---|---|
| Structural integrity | ✓ | ✓ | ✓ | ✓ | ✓ | ✓ | ✓ | ✓ | ✓ | ✓ | ✓ |
| Texture | ✓ | ✓ | ✓ | ✓ | ✓ | ✓ | ✓ | ✓ | ✓ | ✗ | ✗ |
| Taste | ✗ | ✓ | ✓ | ✓ | ✓ | ✓ | ✓ | ✓ | ✓ | ✗ | ✗ |
| Legend | Good | | | Acceptable | | | | Bad | | | |

As demonstrated, all the evaluated systems were able to maintain their structural integrity in the absence of a confining container. Hence, the researchers have concluded that no amount of salt content causes detriment to the structural integrity and thus the gelling properties of the food products, thus the limitations of salt were determined based on perceived taste and texture, where too high or low salt concentrations (0, 6, and 10 wt.%) were deemed inedible, whilst the highest salt concentrations tended to give a grittier and more unpleasant mouthfeel.

## Example 10. Food Product at Varying pH Levels

Example 10.1. Preparation of the food product

To evaluate the effect of pH on the performance of the food product, products with different amounts of acidulant were compared. The formulations are described in the table below, wherein the % represents the wt.% with respect to the total weight of the formulation.

| SPI 1 (%) | 25 | | | | | |
|---|---|---|---|---|---|---|
| Liquid water (%) | 35 - 36 (depending on lemon juice added) | | | | | |
| Water ice (%) | 35 - 36 (depending on lemon juice added) | | | | | |
| NaCl (%) | 2.00 | | | | | |
| Olive oil (%) | 0.5 | | | | | |
| Colorants (%) | 0.5 | | | | | |
| Lemon Juice Concentrate (%) | 0.01 | 0.25 | 0.5 | 0.75 | 1 | 1.8 |
| pH | 7.2 | 6.9 | 6.54 | 6.25 | 5.94 | 5.3 |
| Transglutaminase (%) | 0.036 | | | | | |

Products were prepared comprising 25 wt.% of SPI 1 (protein content minimum 90% on dry basis according to the manufacturer), 2 wt.% NaCl, 0.036 wt.% transglutaminase, adjusting the pH to 7.2, 6.9, 6.25, 5.94, and 5.3 with concentrated lemon juice at 0.01, 0.25, 0.5, 0.75, 1, and 1.8 wt.% respectively, at an olive oil concentration of 0.5 wt.% (extra virgin olive oil (EVOO) provided by Borges, Tárrega, Spain). Six different formulations were prepared with different pH values by adjusting the pH to 7.2, 6.9, 6.25, 5.94, and 5.3 with concentrated lemon juice at 0.01, 0.25, 0.5, 0.75, 1, and 1.8 wt.% respectively. The product was prepared following the experimental procedure described above in example 5.1.

Example 10.2. Results

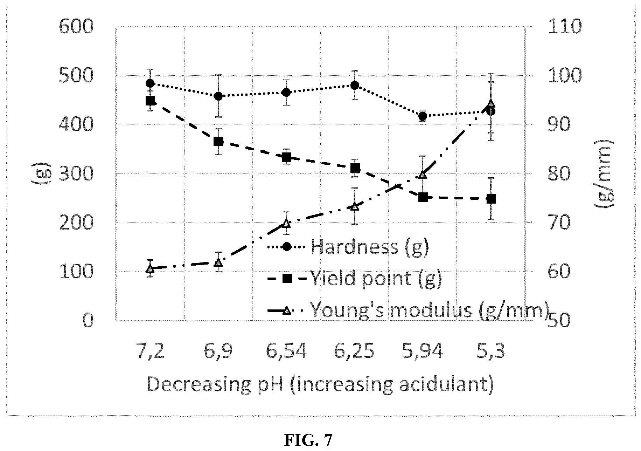

The elasticity, hardness, and yield point of the resulting products were examined following the experimental procedure described above in example 5.2. The results are shown in Figure 7. As it can be seen, the pH has a significant effect on the evaluated textural parameters. A decrease in pH weakens the systems and increases the variation of the data, as visualized by the increased magnitude of the error bars. Overall, the yield point tends to decrease significantly with pH, whereas this effect is less noticeable in hardness data. On the other hand, the increase in Young's modulus with decreasing pH reflects the fact that reducing the pH produces more brittle structures, an effect which was also noted by the researchers upon sensory evaluation, along with an increase in perceived "grittiness" of the structures. Nevertheless, within this range of pH, this particular formulation maintained suitable gel strength and textural (sensory and numerical) parameters.

**Example 11. Preparation of a plant-based cooked ham analogue on an industrial scale**

The preparation process of a vegan plant-based cooked ham is divided in two steps:

1. The whole piece preparation.
2. The cooking and slicing.

The whole piece of the plant-based cooked ham is composed of 20 wt.% SPI 1, 3 wt.% oil (extra virgin olive oil (EVOO) provided by Borges, Tárrega, Spain), 1 wt.% NaCl, 0.25 wt.% acidulant, and 0.036 wt.% transglutaminase enzyme (TG) (PROBIND TXo, BDF Ingredients, Spain) , as well as other added flavors, colors and vitamins, with a final pH of 6.8.

Step 1: Whole piece preparation:

The colorings, flavors, vitamins and acidulant (concentrated lemon juice) were dissolved into a fraction of the water in a plastic bucket. This mix was then added to an industrial bowl cutter (Kramer-Grebe 500 L bowl cutter), along with the required ice fraction and oil. The ingredients were mixed in the cutter for 1 min at low speed for both bowl and blades (10 and 1500 rpm respectively). The SPI was then incorporated while mixing at low speed for the bowl (10 rpm) and high speed for the blades (3000 rpm). The system was mixed until a product temperature of 18 °C was achieved (13.5 min of mixing time). Finally, transglutaminase dissolved in 5 wt.% of the required water fraction is added and mixed for 2 min at high speed for blades (3000 rpm) and low speed for bowl (10 rpm), until reaching a final product temperature of 20 °C. The system was then kneaded under vacuum in an annex kneading machine for 3 min and packed in a casing.

Step 2: Cooking and slicing

In the second step, the whole pieces of ham are cooked in a water bath in a two-stage process:

1. Sous-vide at 50 °C (bath temperature) for 1 hour.
2. Sous-vide for 10 min at 80 °C in the core of the product (bath temperature 85°C).

The pieces were then cooled to 20 °C and stored at 4 °C for 1 week. After one week of storage, the whole pieces were stored overnight in a freezing chamber until a temperature between 0 and -1 °C in the center of the piece was achieved. The piece was then disinfected, the casing manually removed, and the piece carried on automatically to the slicer where it was sliced. The slices were packed in modified atmosphere (80% nitrogen - 20% $CO_2$) in a tray (made from APET/EVOH/PE) with transparent film (made from PP) and stored at 4 °C.

### Example 12. Preparation of plant-based frankfurters at industrial scale

A vegan plant-based Frankfurter prototype was produced at industrial scale using a composition of 20 wt.% SPI 1, 2.5 wt.% oil (extra virgin olive oil (EVOO) provided by Borges, Tárrega, Spain), 0.25 wt.% acidulant (concentrated lemon juice), 1 wt.% NaCl and 0.072 wt.% transglutaminase enzyme (TG) (PROBIND TXo, BDF Ingredients, Spain) , as well as other flavors, colors, and vitamins, with a final pH of 6.8.

The preparation process begins by dissolving the acidulant, colors, flavorings, spices, and vitamins in 47.5% of the total water content. This is done with an industrial hand blender, which dissolves all the powdered ingredients for 2 minutes. This dissolution is added to the industrial bowl cutter (Kramer-Grebe 500 L), along with 47.5% of the total water in ice form and the oil fraction. These components are mixed for 30 seconds at a blade speed of 1500 rpm and the lowest bowl speed (10 rpm), forming a premix. The total required amount of SPI 1 is then added, and the mix is agitated with the maximum blade power of 3000 rpm and the lowest bowl speed of 10 rpm whilst under a vacuum of -0.6 bar. The contents are mixed until the desired temperature of 20°C is reached, requiring in this case 13 minutes of mixing. Subsequently, the cutter is opened and the required amount of transglutaminase, previously dissolved in 5 wt.% of the required water using the industrial hand blender is added. The final system is then mixed for a further 2 min in the cutter at maximum blade power (3000 rpm) and the lowest bowl speed (10 rpm) under vacuum, reaching a final temperature of 21°C. Once the mixing process has been completed, the mix is transferred to a trolley and stuffed into a filler-Handtmann with a cellulose casing, resulting in individual Frankfurt sausages of 45 g per piece, with a respective length and diameter of 14 and 2 cm. Once the pieces are formed, they are placed on a trolley and sent to a smoker oven to be smoked.

After smoking, a 5-minute water dispersion process is carried out in the oven, to detach the casing from the Frankfurters, facilitating the subsequent peeling phase. Before peeling, the trolley with the frankfurters is then taken to a cold chamber for 12 hours at a controlled temperature of between 0 °C to 4 °C. The sausages are then peeled and vacuum-packed in preparation for the second heat treatment, which involves pasteurization at 80 °C for 30 minutes in a boiler. After pasteurization, the sausages are cooled to room temperature, and the industrial production process of the vegan frankfurter is completed.

### Example 13. Preparation of plant-based calamari at lab scale

Plant-based calamari rings, composed of 15 wt.% SPI 1, 1 wt.% NaCl, 0.5 wt.% oil (extra virgin olive oil (EVOO) provided by Borges, Tárrega, Spain), 0.16 wt.% of acidulant to reach a pH of 7.5, 2 wt.% of fish flavorings, and 0.036 wt.% transglutaminase enzyme (TG) (PROBIND TXo, BDF Ingredients, Spain), were prepared on the lab scale in a 4-step process:

> 1. Mixing and homogenization
> 2. Forming and sealing
> 3. Heat treatment
> 4. Slicing and shaping

1. Mixing and homogenization:

The calamari mixture was prepared in a 500 g batch with a water/ice combination (1:1 ratio) using a food processor (Thermomix® TM6, Vorwerk, Spain M.S.L., S.C.). Initially, the ingredients were weighed out in the correct quantities with a precision of +/- 0.005 and added to the process vessel in a defined order. Before their addition, the flavorings and acidulant (concentrated lemon juice) were dissolved in a portion of the required liquid water content (approximately 185 g - solution 1) using a magnetic stirrer (RT2 Basic, Thermo Fisher Scientific, Waltham, USA). Prior to SPI 1 addition, solution 1, the oil content, salt, and the ice fraction (approximately 203 g) were combined in the process vessel. This pre-mix was then agitated at the Thermomix speed 1 (S1, 100 rpm) for 20 seconds on forward blade mode. The SPI 1 was subsequently added and mixed in with gradually increasing speed up to speed 3 (S3, 500 rpm) for 30 seconds on reverse blade mode, after which the lid was removed to allow the sides of the vessel to be scraped, ensuring that all the components were incorporated. The mix was then agitated again at speed 4 (S4, 1100 rpm) whilst the mixer settings were switched from reverse to forward mode every 30 seconds until 7 minutes of shearing were completed. Finally, transglutaminase dissolved in a small quantity of the required water fraction (approximately 18 g - solution 3) was added to the mixture and incorporated for 1 minute at S4, again switching the blades from reverse to forward mode every 30 seconds.

2. Shaping and sealing:

The resulting mixture was then manually weighed into four 100g bags of dimensions 15x25 cm, and vacuum sealed using a Zermat (BLUESVAC-42+) vacuum sealer, then manually shaped into a cylindrical format, ready for heat treatment.

3. Heat treatment:

The heat treatment involved two steps:

- Placement in a water bath at 50 °C for 1 hour.
- Placement in a water bath at 80 °C for 1 hour.

After heat treatment, the products are immediately cooled to 8 - 4 °C by first placing in a cold-water bath of approximately 4 °C, then storing in a refrigerator overnight.

4. Slicing and shaping:

The heat treated and rested samples were opened the following day and sliced to 1 cm thick disks. A hole was then cut in the middle of the disk to simulate a calamari ring.

**Example 14. Preparation of plant-based feta on lab scale**

Plant-based Feta cheese, composed of 30 wt.% SPI 1, 1.5 wt.% NaCl, 15 wt.% oil (extra virgin olive oil (EVOO) provided by Borges, Tárrega, Spain), 0.036 wt.% transglutaminase enzyme (TG) (PROBIND TXo, BDF Ingredients, Spain) and 2 wt.% additional flavors, of pH 5.3 (2.5 wt.% of acidulant), was prepared in a three-step process:

- Mixing and homogenization.
- Shaping and vacuum sealing.
- Heat treatment.

1. Mixing and homogenization:

The Feta mixture was prepared in a 500 g batch with a water/ice combination (1:1 ratio) using a food processor (Thermomix® TM6, Vorwerk, Spain M.S.L., S.C.). Initially, the ingredients were weighed out in the correct quantities with a precision of +/- 0.005 and added to the process vessel in a defined order. Before their addition, the flavorings and acidulant (lemon juice concentrate) were dissolved in a portion of the required liquid water content (approximately 104 g - solution 1) using a magnetic stirrer (RT2 Basic, Thermo Fisher Scientific, Waltham, USA). Prior to SPI 1 addition, solution 1, the oil content, salt, and the ice fraction (approximately 122 g) were combined in the process vessel. This pre-mix was then agitated at the Thermomix speed 1 (S1, 100 rpm) for 20 seconds on forward blade mode. The SPI 1 was subsequently added and mixed in with gradually increasing speed up to speed 3 (S3, 500 rpm) for 30 seconds on reverse blade mode, after which the lid was removed to allow the sides of the vessel to be scraped, ensuring that all the components were incorporated. The mix was then agitated again at speed 4 (S4, 1100 rpm) whilst the mixer settings were switched from reverse to forward mode every 30 seconds until 7 minutes of shearing were completed. Finally, transglutaminase dissolved in a small quantity of the required water fraction (approximately 18 g - solution 3) was added to the mixture and incorporated for 1 minute at S4, again switching the blades from reverse to forward mode every 30 seconds.

2. Shaping and forming:

The resulting mixture was then manually weighed into four 100g bags of dimensions 15x25 cm, and vacuum sealed using a Zermat (BLUESVAC-42+) vacuum sealer, then manually shaped into a cylindrical format, ready for heat treatment.

3. Thermal treatment:

The heat treatment involves two steps:

- Placement in a water bath at 50 °C for 1 hour.
- Placement in a water bath at 80 °C for 1 hour.

After heat treatment, the products are immediately cooled to 8 - 4 °C by first placing in a cold-water bath of approximately 4 °C, then storing in a refrigerator overnight.

### Example 15. Preparation of high-protein, low-carbohydrate plant-based fresh and dried pasta on lab scale

Both fresh and dried fettucine pasta noodles were prepared, employing a formulation which consisted of 17 wt.% SPI 6, 0.3 wt.% NaCl, 0.5 wt.% oil (extra virgin olive oil (EVOO) provided by Borges, Tárrega, Spain), 7 wt.% wheat gluten, 60.2 wt.% water, 0.01 wt.% acidulant to achieve a pH of 6.77, and 15 wt.% of all-purpose wheat flour. This allows a pasta of optimal nutritional value (as compared to traditional wheat pasta), to be obtained.
The steps involved in the production of this product are as follows:

- Combining and kneading.
- Resting and forming.
- Pasteurizing (applies only to fresh pasta).
- Elevated temperature drying (applies only to dried pasta).

1. Combining and kneading:

The ingredients were combined in a stand mixer (KitchenAid® KSM3316X) in several steps. First, the dry ingredients were combined and stirred manually in the mixer vessel. The vessel was then placed in the mixer stand equipped with a dough hook and the water fraction was added gradually whilst mixing on setting 4 of the KitchenAid®. The machine was stopped so as to scrape the sides, then the dough was subjected to continuous mixing at KitchenAid® speed setting 8 for 10 minutes, after which the speed was reduced to setting 6 for five minutes, delivering a total mixing time of 15 minutes. This completes the mixing step of the pasta dough.

2. Resting and forming:

The pasta dough was vacuum sealed and left to rest at 4 °C for 30 - 60 minutes, after which it was ready for forming. The forming involves rolling the pasta dough to 1 mm thickness using a pastaio pasta roller. Using the same equipment with a fettucine cutter attachment, the pasta sheet can be cut into 3 mm width fettucine pieces.

4. Pasteurizing

The fresh fettucine was produced from the fresh pasta dough by sealing pasta portions in a plastic bag and cooking sous-vide at 80 °C for 1 hour, followed by cooling overnight in a refrigerator. The resulting product is ready to be cooked by conventional means.

3. Drying:

The dried fettucine was produced from the fresh pasta dough by leaving the pieces to dry overnight on a pasta rack in a controlled environment maintained at 65 °C. The resulting product is ready to be cooked by conventional means.

### Claims

1. Solid plant-based food product comprising:

   i. from 15 to 30 wt.% of a soy protein isolate;
   ii. from 0.5 to 40 wt.% of an oil;
   iii. from 0 to 1 wt.% of transglutaminase;
   iv. an acidulant to adjust the pH of the solid plant-based food product to from 5 to 8;
   v. from 0.1 to 5 wt.% of a salt selected from the group consisting of NaCl, KCl and mixtures thereof; and
   vi. from 30 to 85 wt.% of water;
   wherein the weight percentages are expressed with respect to the total weight of the solid plant-based food product; and

wherein the soy protein isolate has a negative zeta potential from -20 mV to -50 mV when dispersed in water at pH 6.6, a volume weighted mean diameter D[4,3] from 80 to 400 $\mu$m when dispersed in water at pH 6.6, and a D90 particle size of from 150 to 800 $\mu$m when dispersed in water at pH 6.6 .

2. Solid plant-based food product according to any one of the preceding claims, wherein the soy protein isolate has a negative zeta potential of from -25 to -45 mV when dispersed in water at pH 6.6, a volume weighted mean diameter D[4,3] of from 100 to 250 $\mu$m when dispersed in water at pH 6.6, and a D90 particle size of from 180 to 500 $\mu$m when dispersed in water at pH 6.6.

3. Solid plant-based food product according to any one of the preceding claims, wherein the oil is selected from the group consisting of olive oil, sunflower oil, peanut oil, safflower oil, sesame oil, corn oil, canola oil, soybean oil, linseed oil, castor oil, Tung oil, hemp seed oil, almond oil and mixtures thereof; preferably olive oil.

4. Solid plant-based food product according to any one of the preceding claims, wherein the acid is citric acid, preferably wherein the source of citric acid is lemon juice.

5. Solid plant-based food product according to any one of the preceding claims, wherein the salt is NaCl.

6. Solid plant-based food product according to any one of the preceding claims, wherein:

the soy protein isolate is present in an amount of from 15 to 18 wt.% with respect to the total weight of the solid plant-based food product;
the acidulant is present in an amount to adjust the pH of the product to from 6 to 8; and
the maximum oil wt.% is calculated with Equation 1:

$$Maximum\ oil\ wt\% \ = \ 219 - 9.37x_p - 10.2pH + 0.155x_p^2 \qquad Equation\ 1$$

wherein $x_p$ is the wt.% of soy protein isolate and the pH is the pH as adjusted by the acidulant.

7. Solid plant-based food product according to any one of claims 1 to 5, wherein:

the soy protein isolate is present in an amount of from 18 to 26 wt.% with respect to the total weight of the solid plant-based food product;
the acidulant is present in an amount to adjust the pH of the solid plant-based food product to from 5.1 to 8; and
the maximum oil wt.% is calculated with Equation 1:

$$Maximum\ oil\ wt\% \ = \ 219 - 9.37x_p - 10.2pH + 0.155x_p^2 \qquad Equation\ 1$$

wherein $x_p$ is the wt.% of soy protein isolate and the pH is the pH as adjusted by the acidulant.

8. Solid plant-based food product according to any one of claims 1 to 5, wherein:

the soy protein isolate is present in an amount of from 26 to 30 wt.% with respect to the total weight of the solid plant-based food product;
the acidulant is present in an amount to adjust the pH of the solid plant-based food product to from 5 to 6.6; and
the maximum oil wt.% is calculated with Equation 1:

$$Maximum\ oil\ wt\% \ = \ 219 - 9.37x_p - 10.2pH + 0.155x_p^2 \qquad Equation\ 1$$

wherein $x_p$ is the wt.% of soy protein isolate and the pH is the pH as adjusted by the acidulant.

9. Solid plant-based food product according to any one of the preceding claims, comprising from 0.036 to 1 wt.% of transglutaminase with respect to the total weight of the solid plant-based food product.

10. Solid plant-based food product according to any one of the preceding claims, further comprising one or more ingredients selected from the group consisting of natural fibers, flours from grains, colorants, flavoring agents, vitamins, and minerals.

11. Solid plant-based food product according to any one of the preceding claims, which is devoid of methylcellulose, carageenan, agar, locus bean gum, guar gum, konjac gum, xanthan gum, gellan gum, and/or hydroxypropylmethylcellulose.

12. Solid plant-based food product according to any one of the preceding claims, which is selected from the group consisting of a plant-based meat product analogue, a plant-based dairy product analogue, a plant-based seafood product analogue, a plant-based pasta product analogue and a plant-based egg product analogue.

13. Process for the manufacture of a solid plant-based food product according to any one of the preceding claims, wherein the process comprises:

> a) mixing the oil and a first part of the water to form a premix at a temperature of from -2 to 25 °C, preferably at a temperature of from -2 to 2 °C, even more preferably wherein the water is preferably provided as a mixture of water and ice;
> b) adding the soy protein isolate to the premix obtained in step a);
> c) shearing the mixture obtained in step b) until the temperature in the mixture is from 2 to 42 °C higher than the temperature in the mixture obtained in step b);
> d) if the solid plant-based food product comprises transglutaminase, adding the transglutaminase and a second part of the water to the mixture obtained in step c) and mixing to obtain a homogenous mixture;
> e) if the solid plant-based food product comprises transglutaminase, shaping the mixture obtained in the previous step d) and subjecting the shaped mixture to a heat treatment wherein the core temperature reaches from 40 to 60 °C for 1 to 10 minutes, and subsequently to a heat treatment wherein the core temperature reaches from 65 to 95 °C for 3 to 10 minutes, or
> if the solid plant-based food product does not comprise transglutaminase, shaping the mixture obtained in the step c) and subjecting the shaped mixture to a heat treatment wherein the core temperature reaches from 65 to 95 °C for 3 to 10 minutes;
> f) cooling the mixture obtained in step e) to a core temperature in the range of 0 to 10 °C to obtain the solid plant-based food product; and

> wherein the acidulant and/or the salt are independently added in step a), between steps a) and b), or in step b), optionally in combination with a third part of the water.

14. Process according to claim 13, wherein the water of step a) is provided as a mixture of water and ice, preferably in a weight ratio of 1:2 to 2:1, preferably 1:1.5 to 1.5:1.

15. Solid plant-based food product obtainable by the process according to any one of claims 13 or 14.

**FIG. 1**

**FIG. 2**

FIG. 3

**FIG. 4**

34

**FIG. 5**

**FIG. 6**

**FIG. 7**

Europäisches
Patentamt

European
Patent Office

Office européen
des brevets

# EUROPEAN SEARCH REPORT

**Application Number**

EP 23 38 2364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE WPI<br>Week 2020065<br>Thomson Scientific, London, GB;<br>AN 2020-718089<br>XP002810072,<br>& CN 111 436 576 A (UNIV ZHEJIANG TECHNOLOGY) 24 July 2020 (2020-07-24)<br>* abstract; claims 1-10 *<br>----- | 1-15 | INV.<br>A23L15/00<br>A23C20/00<br>A23C20/02<br>A23J3/00<br>A23J3/14<br>A23J3/16<br>A23J3/22 |
| A | WO 2021/009075 A1 (NESTLE SA [CH])<br>21 January 2021 (2021-01-21)<br>* page 1, paragraphs 3-5; claims 1-22 *<br>----- | 1-15 | |
| A | WO 2019/209939 A2 (SPERO FOODS INC [US])<br>31 October 2019 (2019-10-31)<br>* paragraphs 3 and 123-130 *<br>----- | 1-15 | |

**TECHNICAL FIELDS SEARCHED (IPC)**

A23L
A23C
A23J

The present search report has been drawn up for all claims

| Place of search | Date of completion of the search | Examiner |
|---|---|---|
| Munich | 9 November 2023 | Georgopoulos, N |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 38 2364

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| CN 111436576 | A | 24-07-2020 | NONE | | |
| WO 2021009075 | A1 | 21-01-2021 | AU | 2020313520 A1 | 23-12-2021 |
| | | | BR | 112021026619 A2 | 10-05-2022 |
| | | | CA | 3143621 A1 | 21-01-2021 |
| | | | CL | 2021003377 A1 | 23-09-2022 |
| | | | CN | 114126415 A | 01-03-2022 |
| | | | EP | 3996517 A1 | 18-05-2022 |
| | | | IL | 288318 A | 01-01-2022 |
| | | | JP | 2022539809 A | 13-09-2022 |
| | | | KR | 20220033482 A | 16-03-2022 |
| | | | SG | 11202113117U A | 30-12-2021 |
| | | | US | 2023255234 A1 | 17-08-2023 |
| | | | WO | 2021009075 A1 | 21-01-2021 |
| WO 2019209939 | A2 | 31-10-2019 | AU | 2019261402 A1 | 01-10-2020 |
| | | | BR | 112020021538 A2 | 19-01-2021 |
| | | | CA | 3095933 A1 | 31-10-2019 |
| | | | CN | 112638165 A | 09-04-2021 |
| | | | EP | 3784059 A2 | 03-03-2021 |
| | | | IL | 278081 A | 30-11-2020 |
| | | | JP | 2021521853 A | 30-08-2021 |
| | | | KR | 20210003129 A | 11-01-2021 |
| | | | US | 2021169096 A1 | 10-06-2021 |
| | | | US | 2022030900 A1 | 03-02-2022 |
| | | | US | 2022053808 A1 | 24-02-2022 |
| | | | WO | 2019209939 A2 | 31-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Official Methods of Analysis of AOAC International. AOAC International, 2019
- 1.8 Centroid. **SUBRAMANIAN, R.** Strength of Materials. Oxford University Press, 2010
- Food Rheology. **FRYER, P. ; P. FRYER ; D. PYLE ; C. RIELLY.** Chemical Engineering for the Food Industry. Springer Science+Business Media, 1997, 195-233
- **HURLER, J. ; ENGESLAND, A. ; POORAHMARY KERMANY, B. ; SKALKO-BASNET, N.** Improved texture analysis for hydrogel characterization: Gel cohesiveness, adhesiveness, and hardness. *Journal of Applied Polymer Science,* 2012, 180-188
- Production and Characterization. **HU, J. ; KUMAR, B. ; LU, J.** Handbook of Fibrous Materials. John Wiley & Sons, 2020, vol. 1
- Applications in Energy, Environmental Science and Healthcare. **HU, J.,KUMAR, B.,LU, J.** HANDBOOK OF FIBROUS MATERIALS. John Wiley & Sons, 2020, vol. 2
- 3.6 Creep Compliance. **BOURNE, M. C.** Food Texture and Viscosity-- Concept and Measurement. Elsevier, 2002